(19) Europäisches Patentamt / European Patent Office / Office européen des brevets

(11) **EP 4 700 453 A2**

(12) **EUROPEAN PATENT APPLICATION**

(43) Date of publication:
**25.02.2026 Bulletin 2026/09**

(51) International Patent Classification (IPC):
*G02B 13/00* (2006.01)   *G02B 13/06* (2006.01)
*G02B 9/64* (2006.01)

(21) Application number: **25224106.2**

(22) Date of filing: **16.12.2025**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.12.2024 CN 202411997072**

(71) Applicant: **Jiangxi OFILM Optical Co. Ltd.
Nanchang, Jiangxi 330096 (CN)**

(72) Inventors:
• **WANG, Jiahui
Nanchang, 330096 (CN)**
• **LIU, Binbin
Shenzhen, 518106 (CN)**

(74) Representative: **Metida
Gyneju str. 16
01109 Vilnius (LT)**

(54) **OPTICAL SYSTEM, IMAGE MODULE, AND ELECTRONIC DEVICE**

(57)    An optical system (10), from an object side to an imaging side along an optical axis (101), sequentially includes an adjustable aperture (STO) for adjusting an aperture size, a first lens (L1), a second lens (L2), a third lens (L3), a fourth lens (L4), a fifth lens (L5), and a sixth lens (L6). The first and sixth lenses (L1, L6) have positive refractive power, the second, fifth, and seventh lenses (L2, L5, L7) have negative refractive power, the third and fourth lenses (L3, L4) have refractive power. Object side surfaces (S1, S7, S11, S13) of the first, fourth, sixth, and seventh lenses (L1, L4, L6, L7) are convex near the optical axis (101), imaging side surfaces (S2, S8, S10, S14) of the first, fourth, fifth, and seventh lenses (L1, L4, L5, L7) are concave near the optical axis (101). The optical system (10) satisfies: 80°<FOV<90°, 33<FOV/(F-NOmax-FNOmin)<38, and 1.2<TTL/ImgH<1.3.

FIG. 1

EP 4 700 453 A2

**Description**

FIELD

The present invention relates to field of imaging, and in particular to an optical system, an image module, and an electronic device.

BACKGROUND

In recent years, various mobile electronic devices equipped with image modules (including digital cameras, smart phones, notebook computers, tablet computers, and other portable information terminals) have been rapidly developing and popularizing. The adjustable aperture system was originally mostly used in digital cameras or video cameras, featuring high-quality imaging effects and adjustable apertures. Nowadays, micro camera units with miniaturized imaging units are increasingly applied in other widely used electronic devices.

To adapt to the trends of increasing pixel count, expanding adjustable apertures, and miniaturizing optical imaging lenses, more stringent requirements and urgent demands have been placed on the specifications of electronic devices. However, the realization of adjustable apertures and the combination of multiple lenses often lead to a large volume of the optical system, which is difficult to meet the trend of miniaturization.

SUMMARY

In view of the above, it is necessary to propose an optical system, an image module, and an electronic device to solve a problem that the optical system needs to be miniaturized, have good imaging effects, and have an adjustable aperture.

In a first aspect, the present application provides an optical system with seven lenses having refractive power. The optical system includes an adjustable aperture for adjusting aperture size, a first lens having positive refractive power, a second lens having negative refractive power, a third lens having refractive power, a fourth lens having refractive power, a fifth lens having negative refractive power, a sixth lens having positive refractive power, and a seventh lens having negative refractive power from an object side to an image side along an optical aixs. An object side surface of the first lens is convex near the optical axis, and an imaging side surface of the first lens is concave near the optical axis. An object side surface of the fourth lens is convex near the optical axis, and an imaging side surface of the fourth lens is concave near the optical axis. An imaging side surface of the fifth lens is concave near the optical axis. An object side surface of the sixth lens is convex near the optical axis. An object side surface of the seventh lens is convex near the optical axis, and an imaging side surface of the fourth lens is concave near the optical axis. The optical system satisfies following conditional expressions: $80°<FOV<90°$; $33<FOV/(FNOmax-FNOmin)<38$; $1.2<TTL/ImgH<1.3$, wherein FOV is the maximum field of view angle of the optical system, FNOmax is the maximum aperture number of the optical system, FNOmin is the minimum aperture number of the optical system, TTL is a distance from the object side surface of the first lens to an image plane of the optical system along the optical axis, and ImgH is half of an image height corresponding to the maximum field of view angle of the optical system.

The first lens to the seventh lens are arranged in that sequence from the object side of the optical system, and the adjustable aperture is located at a front end of the first lens, which can achieve aperture changes from a large aperture to a small aperture, thereby controlling the amount of light entering. The first lens has positive refractive power, with the object side surface being convex near the optical axis and the imaging side surface being concave near the optical axis, which is conducive to the convergence of light in a wide field of view and ensures a small lens diameter. The second lens has negative refractive power, which helps correct the aberrations produced by the previous lens. The third lens and the fourth lens have refractive powers, and the fifth lens has negative refractive power, with the object side surface of the fourth lens being convex near the optical axis and the imaging side surface of the fourth lens being concave near the optical axis, and the imaging side surface of the fifth lens being concave near the optical axis, which is conducive to correcting the distortion, spherical aberration and astigmatism produced by the previous group of lenses. The sixth lens has positive refractive power, with the object side surface being convex near the optical axis, which is beneficial for correcting aberrations. The seventh lens has negative refractive power, with the object side surface being convex near the optical axis and the imaging side surface being concave near the optical axis, which can shorten the total length and correct aberrations, while suppressing the angle of light exit.

By arranging the optical system to satisfy $80°<FOV<90°$, the maximum field of view angle of the optical system may be controlled within a reasonable range, which avoids introducing excessive aberrations, and is conducive to the optical system meeting the requirements of miniaturization while obtaining a sufficient field of view.

By arranging the optical system to satisfy $33<FOV/(FNOmax-FNOmin)<38$, the optical system may have a large field of view and the aperture number is maintained within a reasonable range, which achieves a combined effect of a large field of view and a large aperture for optical system, and allows the optical system to have a reasonable amount of light intake, thereby enhancing the overall illumination of the imaging picture and allowing optical system to be suitable for different lighting environments.

By arranging the optical system to satisfy 1.2<TTL/ImgH<1.3, a ratio of the distance from the object side surface of the first lens to the image plane of optical system along the optical axis to half of the image height corresponding to the maximum field of view angle of optical system may be reasonably arranged, which is beneficial to improving the resolution of optical system across the entire field of view and the imaging quality at the edge field of view; at the same time, which is also beneficial to allowing the optical total length of optical system to be smaller, thereby achieving the characteristic of miniaturization.

In a second aspect, the present application discloses an image module including the above-mentioned optical system and a photosensitive chip arranged on the imaging side of the optical system. A photosensitive surface of the photosensitive chip is located at the image plane of the optical system. The light of the object passing through the lens and incident on the photosensitive surface can be converted into an electrical signal of the image. The photosensitive chip may be a complementary metal oxide semiconductor or a charge-coupled device. The image module may be an image module integrated in an electronic device or an independent lens. By incorporating the optical system provided in the embodiments of the present application into the image module, the image module can be made smaller, have good imaging performance, and have an adjustable aperture.

In a third aspect, the present application also discloses an electronic device. including a housing and the image module of the second aspect arranged in the housing. The electronic device may be, but is not limited to, a smart phone, a computer, and a smart watch. By incorporating the image module provided in the present application into the electronic device, the electronic device can be made smaller, have good imaging performance, and have an adjustable aperture.

BRIEF DESCRIPTION OF THE DRAWINGS

FIG. 1 is a schematic structure diagram of an optical system of a first embodiment in a first aperture state of the present application.

FIG. 2 is a spherical aberration diagram, astigmatism curve diagram and distortion diagram of the optical system of FIG. 1.

FIG. 3 is a schematic structure diagram of the optical system of the first embodiment in a second aperture state of the present application.

FIG. 4 is a spherical aberration diagram, astigmatism curve diagram and distortion diagram of the optical system of FIG. 3.

FIG. 5 is a schematic structure diagram of the optical system of the first embodiment in a third aperture state of the present application.

FIG. 6 is a spherical aberration diagram, astigmatism curve diagram and distortion diagram of the optical system of fig. 5.

FIG. 7 is a schematic structure diagram of the optical system of the first embodiment in a fourth aperture state of the present application.

FIG. 8 is a spherical aberration diagram, astigmatism curve diagram and distortion diagram of the optical system of FIG. 7.

FIG. 9 is a schematic structure diagram of an optical system of a second embodiment in a first aperture state of the present application.

FIG. 10 is a spherical aberration diagram, astigmatism curve diagram and distortion diagram of the optical system of FIG. 9.

FIG. 11 is a schematic structure diagram of an optical system of a third embodiment in a first aperture state of the present application.

FIG. 12 is a spherical aberration diagram, astigmatism curve diagram and distortion diagram of the optical system of FIG. 11.

FIG. 13 is a schematic structure diagram of an optical system of a fourth embodiment in a first aperture state of the present application.

FIG. 14 is a spherical aberration diagram, astigmatism curve diagram and distortion diagram of the optical system of FIG. 13.

FIG. 15 is a schematic structure diagram of an optical system of an fifthth embodiment in a first aperture state of the present application.

FIG. 16 is a spherical aberration diagram, astigmatism curve diagram and distortion diagram of the optical system of FIG. 15.

FIG. 17 is a schematic structure diagram of an optical system of a sixth embodiment in a first aperture state of the present application.

FIG. 18 is a spherical aberration diagram, astigmatism curve diagram and distortion diagram of the optical system of FIG. 17.

FIG. 19 is a schematic diagram of an image module of an embodiment of the present application.

FIG. 20 is a schematic diagram of an electronic device of an embodiment of the present application.

DETAILED DESCRIPTION

The following describes in detail the embodiments of the present application, embodiments of which are shown in the accompanying drawings, in which the same or similar reference numerals denote the same or similar elements or elements having the same or similar functions throughout. The embodiments described below with reference to the accompanying drawings are exemplary and are intended to explain the present application, and should not be construed as limiting the present application.

A first aspect of the present application provides an optical system 10 with a total of seven lenses having refractive power, from an object side to an image side along an optical axis 101 of the optical system 10, the optical system sequentially includes an adjustable aperture STO, a first lens L1, a second lens L2, a third lens L3, a fourth lens L4, a fifth lens L5, a sixth lens L6 and a seventh lens L7.

The adjustable aperture STO is used to adjust the aperture size. The first lens L1 has positive refractive power, and an object side surface S1 of the first lens L1 is convex near the optical axis 101, an imaging side surface S2 of the first lens L1 is concave near the optical axis 101. The second lens L2 has negative refractive power. The third lens L3 has refractive power. The fourth lens L4 has refractive power, and an object side surface S7 of the fourth lens L4 is convex near the optical axis 101, an imaging side surface S8 of the fourth lens L4 is concave near the optical axis 101. The fifth lens L5 has negative refractive power, and an imaging side surface S10 of the fifth lens L5 is concave near the optical axis 101. The sixth lens L6 has positive refractive power, and an object side surface S11 of the sixth lens L6 is convex near the optical axis 101. The seventh lens L7 has negative refractive power, and an object side surface S13 of the seventh lens L7 is convex near the optical axis 101, an imaging side surface S14 of the seventh lens L7 is concave near the optical axis 101.

The first lens L1 to the seventh lens L7 are arranged in that sequence from the object side of the optical system 10, and the adjustable aperture STO is located at a front end of the first lens L1, which can achieve aperture changes from a large aperture to a small aperture, thereby controlling the amount of light entering. The first lens L1 has positive refractive power, with the object side surface S1 being convex near the optical axis 101 and the imaging side surface S2 being concave near the optical axis 101, which is conducive to the convergence of light in a wide field of view and ensures a small lens diameter. The second lens L2 has negative refractive power, which helps correct the aberrations produced by the previous lens. The third lens L3 and the fourth lens L4 have refractive powers, and the fifth lens L5 has negative refractive power, with the object side surface S7 of the fourth lens L4 being convex near the optical axis 101 and the imaging side surface S8 of the fourth lens L4 being concave near the optical axis 101, and the imaging side surface S10 of the fifth lens L5 being concave near the optical axis 101, which is conducive to correcting the distortion, spherical aberration and astigmatism produced by the previous group of lenses. The sixth lens L6 has positive refractive power, with the object side surface S11 being convex near the optical axis 101, which is beneficial for correcting aberrations. The seventh lens L7 has negative refractive power, with the object side surface S13 being convex near the optical axis 101 and the imaging side surface S14 being concave near the optical axis 101, which can shorten the total length and correct aberrations, while suppressing the angle of light exit.

In some embodiments, the optical system 10 may satisfy the following conditional expression: $80°<FOV<90°$, wherein FOV is the maximum field of view angle of the optical system 10. When the above conditional expression is satisfied, it may control the maximum field of view angle of the optical system 10 within a reasonable range, which avoids introducing excessive aberrations, and is conducive to the optical system 10 meeting the requirements of miniaturization while obtaining a sufficient field of view.

In some embodiments, the optical system 10 may satisfy the following conditional expression: $33<FOV/(FNOmax-FNOmin)<38$, wherein FNOmax is the maximum aperture number of the optical system 10, and FNOmin is the minimum aperture number of the optical system 10. When the above conditional expression is satisfied, it can enable optical system 10 to have a large field of view and maintain the aperture number within a reasonable range, which achieves a combined effect of a large field of view and a large aperture for optical system 10, and allows the optical system 10 to have a reasonable amount of light intake, thereby enhancing the overall illumination of the imaging picture and allowing optical system 10 to be suitable for different lighting environments.

In some embodiments, the optical system 10 may satisfy the following conditional expression: $1.2<TTL/ImgH<1.3$, wherein TTL is a distance from the object side surface S1 of the first lens L1 to an image plane IMG of optical system 10 along the optical axis 101, and ImgH is half of an image height corresponding to the maximum field of view angle of optical system 10. When the above conditional expression is satisfied, a ratio of the distance from the object side surface S1 of the first lens L1 to the image plane IMG of optical system 10 along the optical axis 101 to half of the image height corresponding to the maximum field of view angle of optical system 10 may be reasonably arranged, which is beneficial to improving the resolution of optical system 10 across the entire field of view and the imaging quality at the edge field of view; at the same time, which is also beneficial to allowing the optical total length of optical system 10 to be smaller, thereby achieving the characteristic of miniaturization.

In some embodiments, the optical system 10 may satisfy the following conditional expression: 1.1<f1/f<1.4, wherein f1 is an effective focal length of the first lens L1, and f is an effective focal length of optical system 10. When the above conditional expression is satisfied, it is beneficial to a proper matching of the refractive power of the first lens L1 in optical system 10, and the surface shape design of the first lens L1 is allowed to be simpler and more flexible, which enable the first lens L1 to support a large field of view and a large aperture, and at the same time, which is also beneficial to converging the light incident from the first lens L1 to optical system 10, thereby delaying the incident angle of the light, reducing aberrations, and simplifying the balance between the overall aberration correction and the imaging quality of the optical system 10.

In some embodiments, the optical system 10 may satisfy the following conditional expression: - 9<f2/f<-4, wherein f2 is an effective focal length of the second lens L2. When the above conditional expression is satisfied, it is beneficial to a proper matching of the refractive power of the second lens L2 in optical system 10, and the surface shape design of the second lens L2 is allowed to be simpler and more flexible, thereby reducing aberrations, and simplifying the balance between the overall aberration correction and the imaging quality of the optical system 10.

In some embodiments, the optical system 10 may satisfy the following conditional expression: 3<|f3|/f, wherein f3 is an effective focal length of the third lens L3. When the above conditional expression is satisfied, it is beneficial to a proper matching of the refractive power of the third lens L3 in optical system 10, and the surface shape design of the third lens L3 is allowed to be simpler and more flexible, thereby reducing aberrations, and simplifying the balance between the overall aberration correction and the imaging quality of the optical system 10.

In some embodiments, the optical system 10 may satisfy the following conditional expression: 4<|f4|/f, wherein f4 is an effective focal length of the fourth lens L4. When the above conditional expression is satisfied, it is beneficial to the fourth lens L4 forming a double-Gauss structure with the aforementioned three lenses, thereby allowing light rays to be smoothly transmitted to subsequent lenses while eliminating aberrations.

In some embodiments, the optical system 10 may satisfy the following conditional expression: - 2.3<f5/f<-1.8, wherein f5 is an effective focal length of the fifth lens L5. When the above conditional expression is satisfied, it is beneficial to the fifth lens L5 gently diffusing the light beam, thereby laying the foundation for subsequent large image surface imaging.

In some embodiments, the optical system 10 may satisfy the following conditional expression: 1.3<f/f6<1.5, wherein f6 is an effective focal length of the sixth lens L6. When the above conditional expression is satisfied, it is beneficial to the sixth lens L6 balancing the aberrations of the aforementioned lenses, thereby improving the imaging quality.

In some embodiments, the optical system 10 may satisfy the following conditional expression: - 1.4<f/f7<-1.1, wherein f7 is an effective focal length of the seventh lens L7. When the above conditional expression is satisfied, it is beneficial to the seventh lens L7 shortening the back focal length, thereby achieving the miniaturization design of optical system 10.

R2n-1 is defined as a radius of curvature of the object side surface of the nth lens at the optical axis 101, and R2n is defined as a radius of curvature of the imaging side surface of the nth lens at the optical axis 101, wherein n is any integer from 1 to 7. For example, a radius of curvature of the object side surface S1 of the first lens L1 at the optical axis 101 is R1, and a radius of curvature of the imaging side surface S2 of the first lens L1 at the optical axis 101 is R2, and so on.

In some embodiments, the optical system 10 may satisfy the following conditional expression: 2.3<f/R1< 2.6. In some embodiments, the optical system 10 may satisfy the following conditional expression: 0.9<R2/f<1.5. When at least one of the above conditional expressions is satisfied, it helps maintain the astigmatism of the first lens L1 within a reasonable range, thereby ensuring that the optical system 10 has good imaging quality.

In some embodiments, the optical system 10 may satisfy the following conditional expression: 1.1<|R3|/f<3.8. In some embodiments, the optical system 10 may satisfy the following conditional expression: 0.8<|R4|/f. When at least one of the above conditional expressions is satisfied, it helps maintain the astigmatism of the second lens L2 within a reasonable range and effectively balance the astigmatism produced by the first lens L1, thereby ensuring the optical system 10 has good imaging quality.

In some embodiments, the optical system 10 may satisfy the following conditional expression: 1.5<|R5|/f<13. In some embodiments, the optical system 10 may satisfy the following conditional expression: 5<|R6|/f. When at least one of the above conditional expressions is satisfied, it helps maintain the surface shape of the third lens L3 within a reasonable range and effectively balance the aberrations produced by the first lens L1 and the second lens L2, thereby ensuring the optical system 10 has good imaging quality.

In some embodiments, the optical system 10 may satisfy the following conditional expression: 1.5<R7/f<3.9. In some embodiments, the optical system 10 may satisfy the following conditional expression: 1.45<R8/f<1.95. When at least one of the above conditional expressions is satisfied, it helps maintain the surface shape of the fourth lens L4 within a reasonable range and facilitates a formation of a double-Gauss structure with the first lens L1 to the third lens L3, thereby ensuring the optical system 10 has good imaging quality.

In some embodiments, the optical system 10 may satisfy the following conditional expression: 11<|R9|/f. In some embodiments, the optical system 10 may satisfy the following conditional expression: 1<R10/f<1.3. When at least one of the above conditional expressions is satisfied, it helps maintain the refractive power of the fifth lens L5 within a reasonable range, thereby avoiding excessive refractive power of the fifth lens L5 and gently receiving the light from the object side, so that the optical system 10 has good imaging quality.

In some embodiments, the optical system 10 may satisfy the following conditional expression: 2.5<R11/f<2.7. In some embodiments, the optical system may satisfy the following conditional expression: 20<|R12|/f. When at least one of the above conditional expressions is satisfied, it helps maintain the surface shape of the sixth lens L6 within a reasonable range, and the overall performance is balanced with the seventh lens L7 to correct aberrations, thereby ensuring the optical system 10 has good imaging quality.

In some embodiments, the optical system 10 may satisfy the following conditional expression: 1.2<f/R13<1.4. In some embodiments, the optical system may satisfy the following conditional expression: 3.5<f/R14<4. When at least one of the above conditional expressions is satisfied, it helps maintain the surface shape of the seventh lens L7 within a reasonable range, and the overall performance is balanced with the sixth lens L6 to correct aberrations, thereby ensuring the optical system 10 has good imaging quality.

In some embodiments, the optical system 10 may satisfy the following conditional expression: -1.1<(R11+R12)/(R11-R12)<-0.9. When the above conditional expression is satisfied, it helps correct the astigmatism of the optical system 10, and the surface shapes of the two surfaces of the sixth lens do not differ too much, thereby reducing the incident angle of light on the two surfaces.

In some embodiments, the optical system 10 may satisfy the following conditional expression: 1.3<f12/f<1.5, wherein f12 is a combined effective focal length of the first lens L1 and the second lens L2. When the above conditional expression is satisfied, it is conducive to a mutual regulation of the first lens L1 and the second lens L2 to control aberrations, thereby facilitating the reception of light incident at large angles and controlling the gentle entry of incident light into the optical system 10, so that the tolerance sensitivity of the optical system 10 is reduced.

In some embodiments, the optical system 10 may satisfy the following conditional expression: 8<|f34|/f, wherein f34 is a combined effective focal length of the third lens L3 and the fourth lens L4. When the above conditional expression is satisfied, it is beneficial for a collaborative cooperation of the third lens L3 to the fourth lens L4 to gradually eliminate chromatic aberration, thereby improving the imaging quality.

In some embodiments, the optical system 10 may satisfy the following conditional expression: 16<|f567|/f, wherein f567 is a combined effective focal length of the fifth lens L5, the sixth lens L6, and the seventh lens L7. When the above conditional expression is satisfied, it is conducive to the collaborative cooperation of the fifth lens L5 to the seventh lens L7 to gradually eliminate chromatic aberration, and is also beneficial for adjusting the back focal length and controlling the off-axis aberration and the incident angle of light on the image plane IMG.

In some embodiments, the optical system 10 may satisfy the following conditional expression: 1.1<TTL/f<1.3. When the above conditional expression is satisfied, it is conducive to the reasonable configuration of a ratio of the distance from the object side surface S1 of the first lens L1 to the image plane IMG of the optical system 10 along the optical axis 101 to the effective focal length of the optical system 10, thereby allowing the optical system 10 to have a smaller optical total length and achieve the characteristic of miniaturization, and also allowing the optical system 10 to have a better telephoto effect.

In some embodiments, the optical system may satisfy the following conditional expression: 0.9<ImgH/f<1.1. When the above conditional expression is satisfied, the refractive power of the optical system 10 matches the size of the imaging surface, thereby improving the imaging quality of the optical system 10.

In some embodiments, the optical system 10 may satisfy the following conditional expression: 0.77<DL/TTL<0.81, wherein DL is a distance from the object side surface S1 of the first lens L1 to the imaging side surface S14 of the seventh lens L7 along the optical axis 101. When the above conditional expression is satisfied, it is conducive to the reasonable arrangement of a ratio of the distance from the object side surface S1 of the first lens L1 to the imaging side surface S14 of the seventh lens L7 along the optical axis 101 to the distance from the object side surface S1 of the first lens L1 to the image plane IMG of the optical system 10 along the optical axis 101, so that under the premise of achieving the miniaturization of the optical system 10, it increases a distance from the imaging side surface S14 of the seventh lens L7 to the image plane IMG of the optical system 10 along the optical axis 101, thereby increasing the layout space at the module structure end.

In some embodiments, the optical system 10 may satisfy the following conditional expression: 4.3<f7/SAG71<5.6. In some embodiments, the optical system 10 may satisfy the following conditional expression: -24<f7/SAG72<-19. Wherein, SAG71 is a sagitta of the maximum effective aperture of the object side surface S13 of the seventh lens L7, and SAG72 is a sagitta of the maximum effective aperture of the imaging side surface S14 of the seventh lens L7. When at least one of the above conditional expressions is satisfied, the effective focal length of the seventh lens L7 and the surface shape of the object side surface S13 of the seventh lens L7 may be reasonably arranged, which is beneficial for minimizing chromatic aberration and spherical aberration to the greatest extent and improving the imaging quality of the optical system 10, at the same time, is also beneficial for reasonably distributing the refractive power of the seventh lens L7, enhancing the light-gathering ability of the optical system 10, reducing the total length of the optical system 10, thereby achieving the miniaturization of the optical system 10.

In some embodiments, the optical system 10 may satisfy the following conditional expression: -2.1<(SAG71+SAG72)/CT7<-1.4, wherein CT7 is a thickness of the seventh lens L7 at the optical axis 101. When the above conditional expression is satisfied, it helps to reasonably control the refractive power and thickness of the seventh lens L7 at various points in a direction perpendicular to the optical axis 101, thereby preventing the seventh lens L7 from being too thick or too thin, reducing the incident angle of light on the object side surface S13 of the seventh lens L7, and reducing the tolerance sensitivity of the optical system 10.

In some embodiments, the optical system 10 may satisfy the following conditional expression: 0.5<Yc62/SD62<0.65, wherein Yc62 is a vertical height from an off-axis vertex on the imaging side surface S12 of the sixth lens L6 to the optical axis 101, and SD62 is the maximum effective aperture of the imaging side surface S12 of the sixth lens L6. When the above conditional expression is satisfied, it is conducive to reasonably controlling the refractive power and thickness of the sixth lens L6 at various points in the direction perpendicular to the optical axis 101, thereby preventing the sixth lens L6 from being too thick or too thin, reducing the incident angle of light on the object side surface S11 of the sixth lens L6, and reducing the tolerance sensitivity of the optical system 10.

In some embodiments, the optical system 10 may satisfy the following conditional expression: 0.34<Yc72/SD72<0.42, wherein Yc72 is a vertical height from an off-axis vertex of the imaging side surface S14 of the seventh lens L7 to the optical axis 101, and SD72 is the maximum effective aperture of the imaging side surface S14 of the seventh lens L7. When the above conditional expression is satisfied, it is conducive to reasonably controlling the refractive power and thickness of the seventh lens L7 at various points in the direction perpendicular to the optical axis 101, thereby preventing the seventh lens L7 from being too thick or too thin, reducing the incident angle of light on the object side surface S13 of the seventh lens L7, and reducing the tolerance sensitivity of the optical system 10.

CTn is defined as a thickness of the nth lens at the optical axis 101, wherein n is any integer from 1 to 8. For example, a thickness of the first lens L1 at the optical axis 101 is CT1, a thickness of the second lens L2 at the optical axis 101 is CT2, and so on.

In some embodiments, the optical system 10 may satisfy the following conditional expression: 3.5<CT1/CT2<4.6. When the above conditional expression is satisfied, it is conducive to forming a quasi-Gauss structure, thereby resulting in better imaging quality.

In some embodiments, the optical system 10 may satisfy the following conditional expression: 1.3<CT3/CT2<1.9. When the above conditional expression is satisfied, it is conducive to forming a quasi-Gauss structure, thereby resulting in better imaging quality.

In some embodiments, the optical system 10 may satisfy the following conditional expression: 0.7<CT4/CT3<1.3. When the above conditional expression is satisfied, it is conducive to forming a quasi-Gauss structure, thereby resulting in better imaging quality.

In some embodiments, the optical system 10 may satisfy the following conditional expression: 1.1<CT6/CT5<2.4. When the above conditional expression is satisfied, it ensures that the difference in lens sizes is not too large, thereby facilitating the gentle transmission of expanded light and avoiding excessive introduction of aberrations, so that it is beneficial for the spatial arrangement of the lenses.

In some embodiments, the optical system 10 may satisfy the following conditional expression: 1.2<CT6/CT7<1.4. When the above conditional expression is satisfied, it ensures that the thicknesses of the two lenses are appropriately matched, thereby facilitating the reduction of the overall thickness and avoiding the reduction in yield due to a single lens being too thin.

In some embodiments, the optical system 10 may satisfy the following conditional expression: 0.9<(CT1+CT2)/(CT3+CT4+CT5)<1.3. When the above conditional expression is satisfied, it is conducive to forming a quasi-Gauss structure, thereby resulting in better imaging quality.

ATnm is defined as a distance between the nth lens and the mth lens at the optical axis 101, wherein n is any integer from 1 to 6, and m=n+1. For example, a distance between the first lens L1 and the second lens L2 at the optical axis 101 is AT12, and so on.

In some embodiments, the optical system 10 may satisfy the following conditional expression: 0.3<AT23/(AT12+AT34)<1.1. When the above conditional expression is satisfied, it is conducive to reasonably controlling gaps between the lenses, thereby improving imaging quality and assembly feasibility, and facilitating the formation of a quasi-Gauss structure.

In some embodiments, the optical system 10 may satisfy the following conditional expression: 1.8<T61/CT6<2.2, wherein T61 is a distance from the maximum effective aperture of the object side surface S11 of the sixth lens L6 to the imaging side surface S12 of the sixth lens L6 along the optical axis 101. When the above conditional expression is satisfied, it can control the thickness of the sixth lens L6, thereby facilitating the spatial arrangement of the lenses and resulting in better imaging quality.

In some embodiments, the optical system 10 may satisfy the following conditional expression: 20<AT67max/-AT67min<41, wherein AT67max is the maximum distance between the sixth lens L6 and the seventh lens L7 along the optical axis 101, and AT67min is the minimum distance between the sixth lens L6 and the seventh lens L7 along the optical axis 101. When the above conditional expression is satisfied, it is beneficial for the reasonable arrangement of the sizes and refractive power of the sixth lens L6 and the seventh lens L7, and can control a displacement of the seventh lens L7 when switching between a telephoto state and a wide-angle state, thereby reducing a movement stroke of the seventh lens L7, and ensuring that a motor can meet a requirement of the displacement of the seventh lens L7.

ETn is defined as a distance in a direction along the optical axis 101 from the maximum effective aperture of the object side surface of the nth lens to the maximum effective aperture of the imaging side surface of the nth lens, wherein n is any integer from 1 to 7. For example, ET1 is a distance in the direction along the optical axis 101 from the maximum effective aperture of the object side surface S1 of the first lens L1 to the maximum effective aperture of the imaging side surface S4 of the second lens L2, and so on.

In some embodiments, the optical system 10 may satisfy the following conditional expression: 0.8<ET7/ET6<1.2. When the above conditional expression is satisfied, it is beneficial for the spatial arrangement of the lenses and results in better imaging quality.

In some embodiments, the optical system 10 may satisfy the following conditional expression: 0.7<ET7/CT7<1.1. When the above conditional expression is satisfied, it can prevent a thickness-to-diameter ratio of the lens from being too large and results in better imaging quality.

In some embodiments, the optical system 10 may further include a filter IR. The filter IR may be an infrared cut-off filter or an infrared bandpass filter. The infrared cut-off filter is used to filter out infrared light, while the infrared bandpass filter only allows infrared light to pass through. In this application, the filter IR is an infrared cut-off filter, which is fixed relative to the lenses in the optical system 10 to prevent infrared light from reaching the image plane IMG of the optical system 10 and interfering with normal imaging. The filter IR may be assembled together with the lenses as part of the optical system 10. In some embodiments, the filter IR may be an independent component outside the optical system 10. The filter IR may be installed between the optical system 10 and a photosensitive chip during assembly. It can be understood that the filter IR may be made of optical glass with a coating, colored glass, or other materials. The material of the filter IR may be glass or plastic, and can be selected according to actual needs. In some embodiments, the function of filtering out infrared light can also be achieved by applying a filter coating on at least one of the first lens L1 to the seventh lens.

First Embodiment

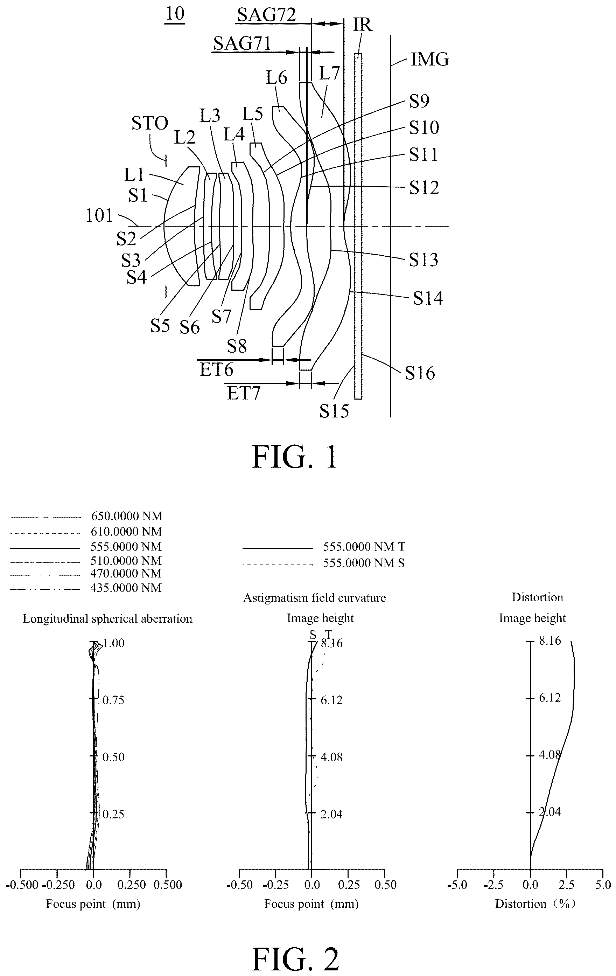

Referring to FIGS. 1, 3, 5 and 7, an optical system 10 in the illustrated embodiment, along an optical axis 101 from an object side to an image side, sequentially includes a first lens L1, a second lens L2, a third lens L3, a fourth lens L4, a fifth lens L5, a sixth lens L6, and a seventh lens L7.

The first lens L1 has positive refractive power. An object side surface S1 of the first lens L1 is convex near the optical axis 101, and an imaging side surface S2 of the first lens L1 is concave near the optical axis 101.

The second lens L2 has negative refractive power. An object side surface S3 of the second lens L2 is convex near the optical axis 101, and an imaging side surface S4 of the second lens L2 is concave near the optical axis 101.

The third lens L3 has positive refractive power. An object side surface S5 of the third lens L3 is convex near the optical axis 101, and an imaging side surface S6 of the third lens L3 is concave near the optical axis 101.

The fourth lens L4 has negative refractive power. An object side surface S7 of the fourth lens L4 is convex near the optical axis 101, and an imaging side surface S8 of the fourth lens L4 is concave near the optical axis 101.

The fifth lens L5 has negative refractive power. An object side surface S9 of the fifth lens L5 is concave near the optical axis 101, and an imaging side surface S10 of the fifth lens L5 is concave near the optical axis 101.

The sixth lens L6 has positive refractive power. An object side surface S11 of the sixth lens L6 is convex near the optical axis 101, and an imaging side surface S12 of the sixth lens L6 is convex near the optical axis 101.

The seventh lens L7 has negative refractive power. An object side surface S13 of the seventh lens L7 is convex near the optical axis 101, and an imaging side surface S14 of the seventh lens L7 is concave near the optical axis 101.

In addition, the optical system 10 further includes an adjustable aperture STO, a filter IR, and an image plane IMG.

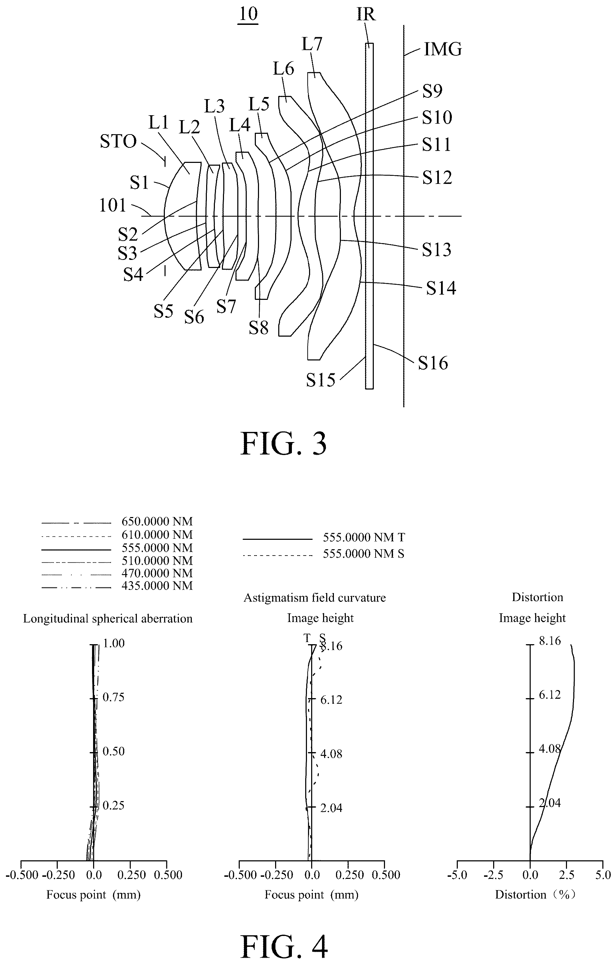

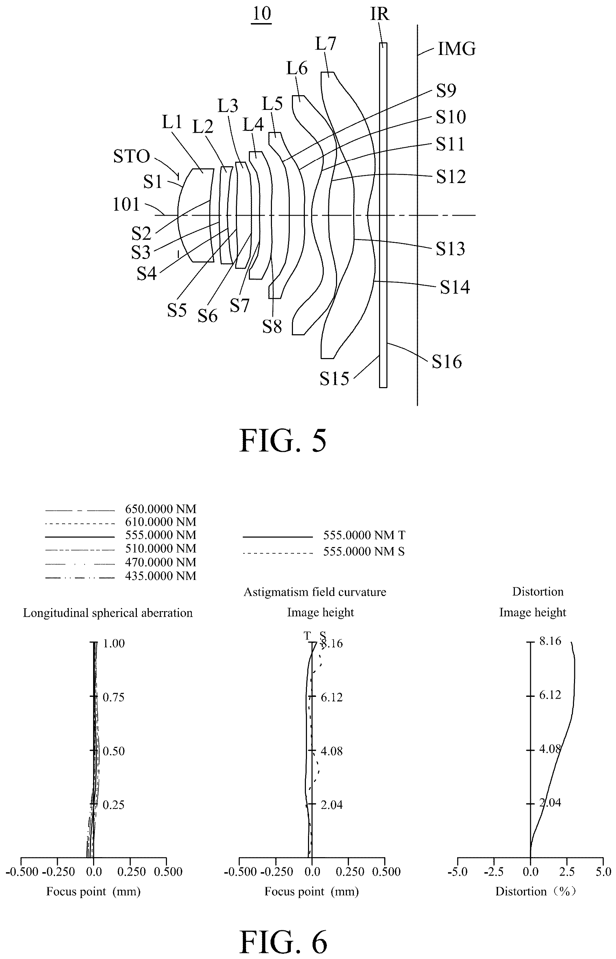

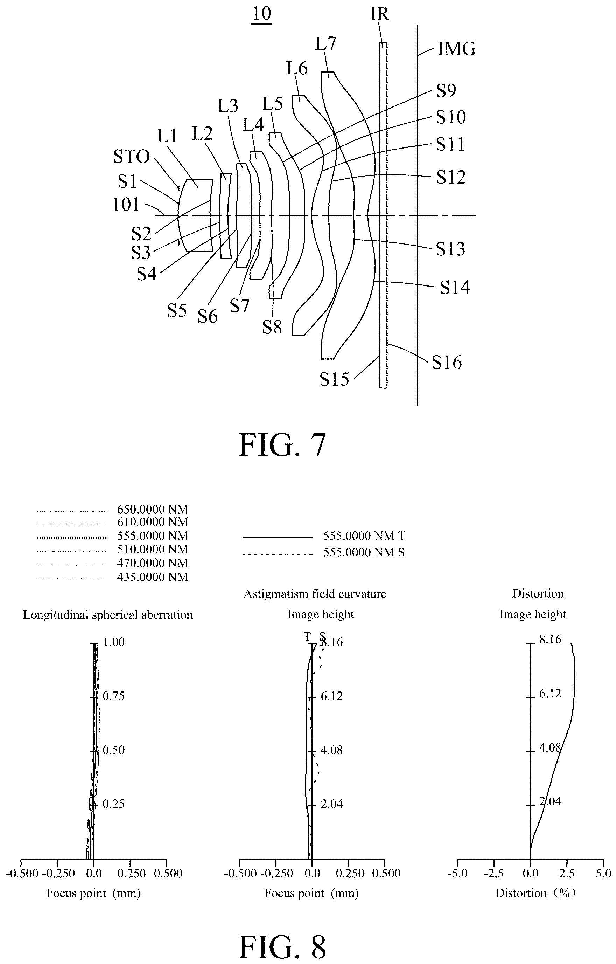

In the illustrated embodiment, the adjustable aperture STO is arranged on the object side surface S1 of the first lens L1 of the optical system 10, and used to control the amount of light entering. FIGS. 1, 3, 5 and 7 respectively show schematic diagrams of the optical system 10 when the adjustable aperture STO is in four different states. When the adjustable aperture STO is in four different states, the optical system 10 can have different apertures. Therefore, for the convenience of describing the four states of the adjustable aperture STO, the state of the adjustable aperture STO shown in FIG. 1 is referred to as the aperture of the optical system 10 in a first aperture state, the state of the adjustable aperture STO shown in FIG. 3 is referred to as the aperture of the optical system 10 in a second aperture state, the state of the adjustable aperture STO shown in FIG. 5 is referred to as the aperture of the optical system 10 in a third aperture state, and the state of the adjustable aperture STO shown in FIG. 7 is referred to as the aperture of the optical system 10 in a fourth aperture state. It can be understood that the adjustable aperture STO is not limited to these four states. By adjusting a distance A from the adjustable aperture STO to the object side surface S1 of the first lens L1 and a size of an opening of the adjustable aperture STO, the adjustable aperture STO can have other different states, so that the optical system 10 can obtain different apertures.

The filter IR is arranged between the seventh lens L7 and the image plane IMG. The filter IR includes an object side surface S15 and an imaging side surface S16. The filter IR is an infrared cut-off filter, and used to filter out infrared light, so that only visible light enters the image plane IMG. The wavelength of visible light is 380nm to 780nm. A material of the filter IR is glass (it can also be plastic), and a surface of the glass is coated by a coating. The materials of the first lens L1 to the seventh lens L7 are plastic (they can also be plastic glass). An effective pixel area of a photosensitive chip is located on the image plane. A photosensitive chip is arranged on the image plane IMG, which captures different band information of the object for subsequent processing.

The parameters of the optical system 10 of the illustrated embodiment are given in Table 1. A positive direction is from the object side to the image side. Among them, the Y radius is the radius of curvature of the surface with the corresponding surface number at the optical axis 101. In the same lens, a surface with a smaller surface number is the object side surface, and vice versa is the imaging side. The value in the "thickness" parameter column is a distance from the current surface to the next surface along the optical axis 101. The focal length, refractive index of material, and Abbe number are obtained at the reference wavelength of 555.0 nm. The units of the Y radius, the thickness and the focal length are all millimeters (mm).

Table 1a

| First embodiment | | | | | | | | |
|---|---|---|---|---|---|---|---|---|
| EFL=8.496mm, FNO=1.6~2.0~2.8~4.0, FOV=86.0°, TTL=10.15mm | | | | | | | | |
| Surface numeral | Surface Name | Surface type | Y radius | Thickness | Material | Refractive index | Abbe number | Focal length |
| | Object side | sphere | Infinity | Infinity | | | | |
| STO | Adjustable aperture | sphere | Infinity | A | | | | |
| S1 | L1 | asphere | 3.438 | 1.354 | Glass | 1.517 | 63.989 | 9.935 |
| S2 | | asphere | 8.996 | 0.407 | | | | |
| S3 | L2 | asphere | 13.965 | 0.350 | Plastic | 1.694 | 18.403 | -35.949 |
| S4 | | asphere | 8.861 | 0.270 | | | | |
| S5 | L3 | asphere | 16.316 | 0.630 | Plastic | 1.546 | 55.932 | 31.846 |
| S6 | | asphere | 260.567 | -0.186 | | | | |
| S7 | L4 | asphere | 27.704 | 0.500 | Plastic | 1.694 | 18.403 | -55.633 |
| S8 | | asphere | 16.010 | 0.756 | | | | |
| S9 | L5 | asphere | -273.670 | 0.632 | Plastic | 1.570 | 37.403 | -17.477 |
| S10 | | asphere | 10.345 | 0.308 | | | | |
| S11 | L6 | asphere | 3.333 | 0.726 | Plastic | 1.546 | 55.932 | 6.041 |
| S12 | | asphere | -302.849 | 1.050 | | | | |
| S13 | L7 | asphere | 6.252 | 0.600 | Plastic | 1.546 | 55.932 | -6.759 |
| S14 | | asphere | 2.242 | 0.500 | | | | |
| S15 | Filter IR | sphere | Infinity | 0.310 | Glass | 1.518 | 64.197 | |
| S16 | | sphere | Infinity | 1.274 | | | | |

(continued)

| First embodiment | | | | | | | | |
|---|---|---|---|---|---|---|---|---|
| EFL=8.496mm, FNO=1.6~2.0~2.8~4.0, FOV=86.0°, TTL=10.15mm | | | | | | | | |
| Surface numeral | Surface Name | Surface type | Y radius | Thickness | Material | Refractive index | Abbe number | Focal length |
| IMG | Image plane | sphere | Infinity | 0.024 | | | | |
| Reference wavelength: 555.0 nm | | | | | | | | |

Table 1b

| Adjustable aperture | First aperture | Second aperture | Third aperture | Fourth aperture |
|---|---|---|---|---|
| FNO | 1.60 | 2.00 | 2.80 | 4.00 |
| A | 0.09 | 0.03 | 0.03 | 0.03 |
| | -0.09 | -0.03 | -0.03 | -0.03 |

Wherein, EFL is an effective focal length of the optical system 10, FNO is the aperture number of the optical system 10, FOV(°) is the maximum field of view angle of the optical system 10, TTL is a distance from the object side surface S1 of the first lens L1 to the image plane IMG along the optical axis 101, that is, the optical total length, and A is a distance from the aperture STO to the object side surface S1 of the first lens L1 in a direction parallel to the optical axis 101.

In this embodiment, object side surfaces and image side surfaces of the first lens L1 to the seventh lens L7 are all aspheric surfaces. The surface shape x of each aspheric lens may be defined by, but not limited to, following aspheric formula:

$$x = \frac{ch^2}{1 + \sqrt{1-(k+1)c^2h^2}} + \sum A_i h^i$$

Wherein, x is a distance from a corresponding point on the aspheric surface to a plane tangent to the vertex of the surface, h is a distance from the corresponding point on the aspheric surface to the optical axis 101, c is a curvature of the vertex of the aspheric surface, k is the conic coefficient, and Ai is the coefficient corresponding to the i-th higher-order term of the aspheric surface shape formula. Table 1c gives the higher-order coefficients A4, A6, A8, A10, A12, A14, A16, A18, A20, A22, A24, A26, A28, and A30 for the aspheric surfaces S1, S2, S3, S4, S5, S6, S7, S8, S9, S10, S11, S12, S13, and S14 that can be used in the first embodiment.

Table 1c

| Aspheric coefficient | | | | | |
|---|---|---|---|---|---|
| Surface number | K | A4 | A6 | A8 | A10 |
| S1 | -7.18647E-01 | 1.66364E-03 | 9.79240E-04 | -7.82056E-04 | 4.63081E-04 |
| S2 | 8.59347E-01 | -3.56207E-04 | -5.16051E-03 | 5.17165E-03 | -3.20155E-03 |
| S3 | 0.00000E+00 | -1.10067E-02 | 1.61223E-03 | -1.75164E-03 | 2.13495E-03 |
| S4 | -1.20351E-01 | -8.58856E-03 | 1.15959E-03 | -1.42058E-03 | 1.80318E-03 |
| S5 | 0.00000E+00 | 5.35575E-03 | -1.29997E-02 | 1.25555E-02 | -8.79963E-03 |
| S6 | 0.00000E+00 | 5.50530E-03 | -1.34692E-02 | 1.18598E-02 | -7.52186E-03 |
| S7 | 0.00000E+00 | -9.22885E-03 | -3.59674E-03 | -2.17475E-03 | 3.53708E-03 |
| S8 | 0.00000E+00 | -6.78636E-03 | -4.85592E-03 | 2.15644E-03 | -6.98698E-04 |
| S9 | 0.00000E+00 | -1.93372E-02 | 7.97945E-03 | -3.63553E-03 | 1.38111E-03 |
| S10 | -1.35342E-01 | -4.62470E-02 | 2.65781E-03 | 2.19643E-03 | -7.44939E-04 |

(continued)

| Aspheric coefficient | | | | | |
|---|---|---|---|---|---|
| Surface number | K | A4 | A6 | A8 | A10 |
| S11 | -5.17135E+00 | 1.81898E-02 | -9.30360E-03 | 2.48176E-03 | -9.61428E-04 |
| S12 | 0.00000E+00 | 3.56002E-02 | 3.72109E-03 | -8.60006E-03 | 3.44771E-03 |
| S13 | -5.68810E-01 | -6.94248E-02 | 2.04798E-02 | -5.10875E-03 | 9.31757E-04 |
| S14 | -5.56907E+00 | -3.80445E-02 | 1.18007E-02 | -2.96796E-03 | 5.54599E-04 |
| Surface number | A12 | A14 | A16 | A18 | A20 |
| S1 | -1.79900E-04 | 4.54141E-05 | -7.14428E-06 | 6.28485E-07 | -2.33803E-08 |
| S2 | 1.23732E-03 | -2.98416E-04 | 4.32678E-05 | -3.39473E-06 | 1.08674E-07 |
| S3 | -1.22609E-03 | 4.07739E-04 | -8.00275E-05 | 8.65473E-06 | -3.97886E-07 |
| S4 | -9.43370E-04 | 2.64604E-04 | -3.88599E-05 | 2.35476E-06 | 4.82390E-09 |
| S5 | 4.09708E-03 | -1.26498E-03 | 2.48288E-04 | -2.81805E-05 | 1.41834E-06 |
| S6 | 3.13432E-03 | -8.44939E-04 | 1.40146E-04 | -1.30155E-05 | 5.23436E-07 |
| S7 | -2.08899E-03 | 6.95511E-04 | -1.35994E-04 | 1.44663E-05 | -6.42618E-07 |
| S8 | 1.61130E-04 | -2.29940E-05 | 1.62008E-06 | -1.68250E-08 | -2.48482E-09 |
| S9 | -3.91657E-04 | 7.19757E-05 | -7.97532E-06 | 4.82612E-07 | -1.21974E-08 |
| S10 | 1.09834E-04 | -8.38371E-06 | 3.10177E-07 | -3.35400E-09 | -5.34137E-11 |
| S11 | 3.53880E-04 | -8.71593E-05 | 1.40077E-05 | -1.51443E-06 | 1.12579E-07 |
| S12 | -7.80542E-04 | 1.16940E-04 | -1.22934E-05 | 9.30608E-07 | -5.11293E-08 |
| S13 | -1.14465E-04 | 9.51104E-06 | -5.44271E-07 | 2.15886E-08 | -5.84091E-10 |
| S14 | -7.51938E-05 | 7.42143E-06 | -5.37056E-07 | 2.85853E-08 | -1.11459E-09 |
| Surface number | A22 | A24 | A26 | A28 | A30 |
| S1 | 0.00000E+00 | 0.00000E+00 | 0.00000E+00 | 0.00000E+00 | 0.00000E+00 |
| S2 | 0.00000E+00 | 0.00000E+00 | 0.00000E+00 | 0.00000E+00 | 0.00000E+00 |
| S3 | 0.00000E+00 | 0.00000E+00 | 0.00000E+00 | 0.00000E+00 | 0.00000E+00 |
| S4 | 0.00000E+00 | 0.00000E+00 | 0.00000E+00 | 0.00000E+00 | 0.00000E+00 |
| S5 | 0.00000E+00 | 0.00000E+00 | 0.00000E+00 | 0.00000E+00 | 0.00000E+00 |
| S6 | 0.00000E+00 | 0.00000E+00 | 0.00000E+00 | 0.00000E+00 | 0.00000E+00 |
| S7 | 0.00000E+00 | 0.00000E+00 | 0.00000E+00 | 0.00000E+00 | 0.00000E+00 |
| S8 | 0.00000E+00 | 0.00000E+00 | 0.00000E+00 | 0.00000E+00 | 0.00000E+00 |
| S9 | 0.00000E+00 | 0.00000E+00 | 0.00000E+00 | 0.00000E+00 | 0.00000E+00 |
| S10 | 0.00000E+00 | 0.00000E+00 | 0.00000E+00 | 0.00000E+00 | 0.00000E+00 |
| S11 | -5.78109E-09 | 2.01862E-10 | -4.58169E-12 | 6.10234E-14 | -3.62232E-16 |
| S12 | 2.02443E-09 | -5.63597E-11 | 1.04750E-12 | -1.16706E-14 | 5.89384E-17 |
| S13 | 1.01664E-11 | -9.42335E-14 | 2.03063E-17 | 8.34044E-18 | -5.71529E-20 |
| S14 | 3.13957E-11 | -6.20795E-13 | 8.16275E-15 | -6.40164E-17 | 2.26355E-19 |

FIG. 2 (the first aperture state), FIG. 4 (the second aperture state), FIG. 6 (the third aperture state), and FIG. 8 (the fourth aperture state) respectively show the longitudinal spherical aberration curve diagram, the astigmatism curve diagram, and the distortion curve diagram of the optical system 10 in the first embodiment under each aperture state.

In the longitudinal spherical aberration curve diagram, the abscissa is the deviation of the focus point (mm), that is, a distance from the image plane IMG to an intersection point of the light and the optical axis 101, and the ordinate is the normalized field of view. It can be seen that the deviation degree of the focus point of each wavelength light in the first embodiment is low, and the diffraction spot or the chromatic aberration is effectively suppressed, indicating that the imaging quality of the optical system 10 in this embodiment is high.

In the astigmatism curve diagram, the abscissa is the deviation of the focus point (mm), that is, the distance from the image plane IMG to the intersection point of the light and the optical axis 101, and the ordinate is the image height (mm). It can be seen that the deviation degree of the sagittal (S) and tangential (T) focus points from the image plane in the first embodiment is low, and the difference between the two is small, indicating that the astigmatism and field curvature are effectively suppressed, and the imaging quality of the optical system 10 in this embodiment is high.

In the distortion curve, the horizontal coordinate is the distortion (%), and the vertical coordinate is the image height (mm). It can be seen that the distortion degree of the reference wavelength light in the first embodiment is low, and the imaging deformation is effectively suppressed, indicating that the imaging quality of the optical system 10 in this embodiment is high.

Second Embodiment

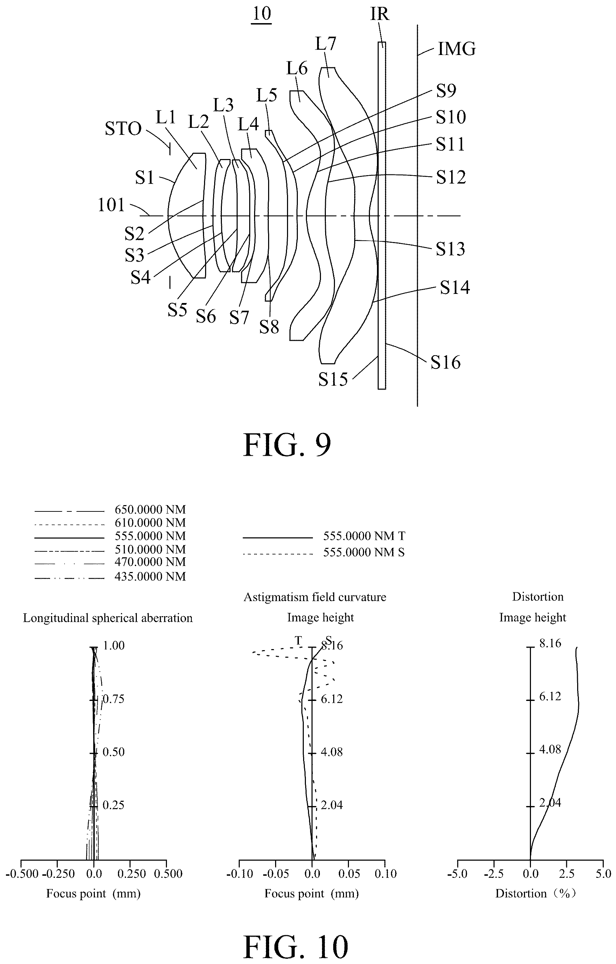

Referring to FIG. 9, an optical system 10 in the illustrated embodiment, along an optical axis 101 from an object side to an image side, sequentially includes a first lens L1, a second lens L2, a third lens L3, a fourth lens L4, a fifth lens L5, a sixth lens L6, and a seventh lens L7.

The first lens L1 has positive refractive power. An object side surface S1 is convex near the optical axis 101, and an imaging side surface S2 of the first lens L1 is concave near the optical axis 101.

The second lens L2 has negative refractive power. An object side surface S3 of the second lens L2 is convex near the optical axis 101, and an imaging side surface S4 of the second lens L2 is concave near the optical axis 101.

The third lens L3 has negative refractive power. An object side surface S5 of the third lens L3 is concave near the optical axis 101, and an imaging side surface S6 of the third lens L3 is convex near the optical axis 101.

The fourth lens L4 has positive refractive power. An object side surface S7 of the fourth lens L4 is convex near the optical axis 101, and an imaging side surface S8 of the fourth lens L4 is concave near the optical axis 101.

The fifth lens L5 has negative refractive power. An object side surface S9 of the fifth lens L5 is convex near the optical axis 101, and an imaging side surface S10 of the fifth lens L5 is concave near the optical axis 101.

The sixth lens L6 has positive refractive power. An object side surface S11 of the sixth lens L6 is convex near the optical axis 101, and an imaging side surface S12 of the sixth lens L6 is concave near the optical axis 101.

The seventh lens L7 has negative refractive power. An object side surface S13 of the seventh lens L7 is convex near the optical axis 101, and an imaging side surface S14 of the seventh lens L7 is concave near the optical axis 101.

In addition, the optical system 10 further includes an adjustable aperture STO, a filter IR, and an image plane IMG.

In the illustrated embodiment, the arrangements of the adjustable aperture STO, the filter IR, and the image plane IMG are approximately the same as those in the first embodiment, and can be referred to in the first embodiment, so no further description is provided. The differences are detailed in the table.

Table 2a

| Second embodiment | | | | | | | | |
|---|---|---|---|---|---|---|---|---|
| EFL=8.70mm, FNO=1.6~2.0~2.8~4.0, FOV=84.6°, TTL=10.15mm | | | | | | | | |
| Surface numeral | Surface Name | Surface type | Y radius | Thickness | Material | Refractive index | Abbe number | Focal length |
| | Object side | sphere | Infinity | Infinity | | | | |
| STO | Adjustable aperture | sphere | Infinity | A | | | | |
| S1 | L1 | asphere | 3.666 | 1.459 | Glass | 1.498 | 81.607 | 9.9656 |
| S2 | | asphere | 12.170 | 0.419 | | | | |
| S3 | L2 | asphere | 9.722 | 0.349 | Plastic | 1.694 | 18.403 | -53.2273 |
| S4 | | asphere | 7.583 | 0.422 | | | | |
| S5 | L3 | asphere | -109.158 | 0.531 | Plastic | 1.546 | 55.932 | -253.8270 |
| S6 | | asphere | -514.618 | 0.100 | | | | |

(continued)

| Second embodiment | | | | | | | | |
|---|---|---|---|---|---|---|---|---|
| EFL=8.70mm, FNO=1.6~2.0~2.8~4.0, FOV=84.6°, TTL=10.15mm | | | | | | | | |
| Surface numeral | Surface Name | Surface type | Y radius | Thickness | Material | Refractive index | Abbe number | Focal length |
| S7 | L4 | asphere | 14.733 | 0.561 | Plastic | 1.694 | 18.403 | 300.0008 |
| S8 | | asphere | 15.607 | 0.818 | | | | |
| S9 | L5 | asphere | 500.000 | 0.391 | Plastic | 1.570 | 37.403 | -17.0532 |
| S10 | | asphere | 9.531 | 0.395 | | | | |
| S11 | L6 | asphere | 3.263 | 0.790 | Plastic | 1.546 | 55.932 | 6.0718 |
| S12 | | asphere | 186.628 | 1.207 | | | | |
| S13 | L7 | asphere | 6.519 | 0.631 | Plastic | 1.546 | 55.932 | -6.9174 |
| S14 | | asphere | 2.310 | 0.375 | | | | |
| S15 | Filter IR | sphere | Infinity | 0.310 | Glass | 1.518 | 64.197 | |
| S16 | | sphere | Infinity | 1.318 | | | | |
| IMG | Image plane | sphere | Infinity | 0.025 | | | | |
| Reference wavelength: 555.0 nm | | | | | | | | |

Table 2b

| Adjustable aperture | First aperture | Second aperture | Third aperture | Fourth aperture |
|---|---|---|---|---|
| FNO | 1.60 | 2.00 | 2.80 | 4.00 |
| A | 0.09 | 0.03 | 0.03 | 0.03 |
| | -0.09 | -0.03 | -0.03 | -0.03 |

Table 2c provides the high-order term coefficients of the aspheric surfaces of each lens in the second embodiment. The aspheric surface shapes can be defined by the formula given in the first embodiment.

Table 2c

| Aspheric coefficient | | | | | |
|---|---|---|---|---|---|
| Surface number | K | A4 | A6 | A8 | A10 |
| S1 | -9.22029E-01 | 1.91568E-03 | 2.77870E-04 | -2.49194E-04 | 1.49391E-04 |
| S2 | -3.10220E+00 | -3.33466E-03 | -1.55738E-04 | 2.29168E-04 | -1.76689E-04 |
| S3 | 3.41179E+00 | -9.36744E-03 | 1.26153E-03 | -5.77779E-04 | 4.84298E-04 |
| S4 | 2.26154E+00 | -7.22791E-03 | 1.72825E-03 | -1.19878E-03 | 9.33230E-04 |
| S5 | 9.90000E+01 | -3.38307E-03 | 3.52744E-03 | -3.32942E-03 | 1.66200E-03 |
| S6 | -9.90000E+01 | -1.85836E-02 | 1.07484E-02 | -6.76228E-03 | 3.24129E-03 |
| S7 | -9.82585E+01 | -1.89686E-02 | -6.09192E-04 | 1.39006E-03 | -8.98694E-04 |
| S8 | -1.54443E+01 | -5.49957E-03 | -6.42151E-03 | 4.09055E-03 | -1.75779E-03 |
| S9 | -9.90000E+01 | -1.59414E-02 | 3.25932E-03 | -2.07689E-04 | -3.80785E-05 |
| S10 | -1.59374E+00 | -4.54214E-02 | 3.74903E-03 | 1.19379E-03 | -4.09800E-04 |
| S11 | -4.86360E+00 | 1.37774E-02 | -5.58448E-03 | 8.89610E-04 | -1.90653E-04 |
| S12 | 7.75697E+01 | 2.88351E-02 | 1.11808E-03 | -4.42800E-03 | 1.63498E-03 |

## EP 4 700 453 A2

(continued)

| Aspheric coefficient | | | | | |
|---|---|---|---|---|---|
| Surface number | K | A4 | A6 | A8 | A10 |
| S13 | -5.67774E-01 | -5.84155E-02 | 1.37558E-02 | -2.82194E-03 | 4.50136E-04 |
| S14 | -5.10855E+00 | -3.18138E-02 | 8.08309E-03 | -1.66950E-03 | 2.61742E-04 |
| Surface number | A12 | A14 | A16 | A18 | A20 |
| S1 | -5.59400E-05 | 1.29193E-05 | -1.83260E-06 | 1.45720E-07 | -5.00027E-09 |
| S2 | 8.17269E-05 | -2.26032E-05 | 3.65947E-06 | -3.17690E-07 | 1.12657E-08 |
| S3 | -1.92285E-04 | 4.75731E-05 | -7.37353E-06 | 6.67958E-07 | -2.71847E-08 |
| S4 | -4.15633E-04 | 1.19325E-04 | -2.14042E-05 | 2.18190E-06 | -9.44520E-08 |
| S5 | -6.26811E-04 | 1.66929E-04 | -2.95691E-05 | 3.06556E-06 | -1.36204E-07 |
| S6 | -1.22820E-03 | 3.29803E-04 | -5.80787E-05 | 5.93212E-06 | -2.62163E-07 |
| S7 | 2.69193E-04 | -3.08717E-05 | -3.15620E-06 | 1.14106E-06 | -8.00736E-08 |
| S8 | 4.98935E-04 | -9.14725E-05 | 1.04043E-05 | -6.68329E-07 | 1.85831E-08 |
| S9 | -5.78443E-06 | 3.94746E-06 | -5.85201E-07 | 3.70740E-08 | -8.78052E-10 |
| S10 | 5.05553E-05 | -2.41894E-06 | -2.71384E-08 | 6.38466E-09 | -1.59727E-10 |
| S11 | 6.15618E-05 | -1.47690E-05 | 2.25269E-06 | -2.25002E-07 | 1.51794E-08 |
| S12 | -3.37640E-04 | 4.62597E-05 | -4.46106E-06 | 3.10463E-07 | -1.57013E-08 |
| S13 | -4.92645E-05 | 3.63620E-06 | -1.83199E-07 | 6.32984E-09 | -1.47413E-10 |
| S14 | -3.01708E-05 | 2.55577E-06 | -1.60445E-07 | 7.49883E-09 | -2.59881E-10 |
| Surface number | A22 | A24 | A26 | A28 | A30 |
| S1 | 0.00000E+00 | 0.00000E+00 | 0.00000E+00 | 0.00000E+00 | 0.00000E+00 |
| S2 | 0.00000E+00 | 0.00000E+00 | 0.00000E+00 | 0.00000E+00 | 0.00000E+00 |
| S3 | 0.00000E+00 | 0.00000E+00 | 0.00000E+00 | 0.00000E+00 | 0.00000E+00 |
| S4 | 0.00000E+00 | 0.00000E+00 | 0.00000E+00 | 0.00000E+00 | 0.00000E+00 |
| S5 | 0.00000E+00 | 0.00000E+00 | 0.00000E+00 | 0.00000E+00 | 0.00000E+00 |
| S6 | 0.00000E+00 | 0.00000E+00 | 0.00000E+00 | 0.00000E+00 | 0.00000E+00 |
| S7 | 0.00000E+00 | 0.00000E+00 | 0.00000E+00 | 0.00000E+00 | 0.00000E+00 |
| S8 | 0.00000E+00 | 0.00000E+00 | 0.00000E+00 | 0.00000E+00 | 0.00000E+00 |
| S9 | 0.00000E+00 | 0.00000E+00 | 0.00000E+00 | 0.00000E+00 | 0.00000E+00 |
| S10 | 0.00000E+00 | 0.00000E+00 | 0.00000E+00 | 0.00000E+00 | 0.00000E+00 |
| S11 | -6.99297E-10 | 2.17397E-11 | -4.37056E-13 | 5.13821E-15 | -2.68610E-17 |
| S12 | 5.72554E-10 | -1.46795E-11 | 2.51154E-13 | -2.57420E-15 | 1.19506E-17 |
| S13 | 2.17569E-12 | -1.65851E-14 | -7.73457E-18 | 1.15848E-18 | -6.34471E-21 |
| S14 | 6.57660E-12 | -1.17836E-13 | 1.41284E-15 | -1.01464E-17 | 3.29382E-20 |

FIG. 10 (the first aperture state) shows the longitudinal spherical aberration curve diagram, the astigmatism curve diagram, and the distortion curve diagram of the optical system 10 in the second embodiment. It can be seen from the figure that the longitudinal spherical aberration, field curvature, and distortion of the optical system 10 are well controlled, and thus the optical system 10 of the illustrated embodiment has good imaging quality. Considering that stopping down the f-number can improve image quality without triggering the diffraction limit, the optical system 10 of the second embodiment also has excellent imaging quality in other aperture states.

Third Embodiment

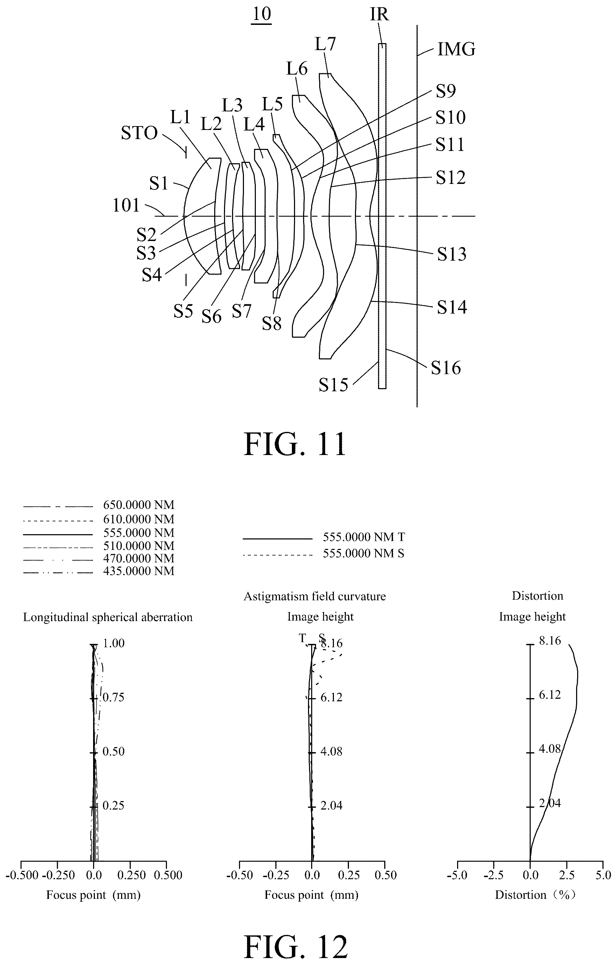

Referring to FIG. 11, an optical system 10 in the illustrated embodiment, along an optical axis 101 from an object side to an image side, sequentially includes a first lens L1, a second lens L2, a third lens L3, a fourth lens L4, a fifth lens L5, a sixth lens L6, and a seventh lens L7.

The first lens L1 has positive refractive power. An object side surface S1 is convex near the optical axis 101, and an imaging side surface S2 of the first lens L1 is concave near the optical axis 101.

The second lens L2 has negative refractive power. An object side surface S3 of the second lens L2 is convex near the optical axis 101, and an imaging side surface S4 of the second lens L2 is concave near the optical axis 101.

The third lens L3 has positive refractive power. An object side surface S5 of the third lens L3 is convex near the optical axis 101, and an imaging side surface S6 of the third lens L3 is concave near the optical axis 101.

The fourth lens L4 has negative refractive power. An object side surface S7 of the fourth lens L4 is convex near the optical axis 101, and an imaging side surface S8 of the fourth lens L4 is concave near the optical axis 101.

The fifth lens L5 has negative refractive power. An object side surface S9 of the fifth lens L5 is convex near the optical axis 101, and an imaging side surface S10 of the fifth lens L5 is concave near the optical axis 101.

The sixth lens L6 has positive refractive power. An object side surface S11 of the sixth lens L6 is convex near the optical axis 101, and an imaging side surface S12 of the sixth lens L6 is convex near the optical axis 101.

The seventh lens L7 has negative refractive power. An object side surface S13 of the seventh lens L7 is convex near the optical axis 101, and an imaging side surface S14 of the seventh lens L7 is concave near the optical axis 101.

In addition, the optical system 10 further includes an adjustable aperture STO, a filter IR, and an image plane IMG.

In the illustrated embodiment, the arrangements of the adjustable aperture STO, the filter IR, and the image plane IMG are approximately the same as those in the first embodiment, and can be referred to in the first embodiment, so no further description is provided. The differences are detailed in the table.

Table 3a

| Third embodiment | | | | | | | | |
|---|---|---|---|---|---|---|---|---|
| EFL=8.300mm, FNO=1.6~2.0~2.8~4.0, FOV=87.6°, TTL=9.9mm | | | | | | | | |
| Surface numeral | Surface Name | Surface type | Y radius | Thickness | Material | Refractive index | Abbe number | Focal length |
| | Object side | sphere | Infinity | Infinity | | | | |
| STO | Adjustable aperture | sphere | Infinity | A | | | | |
| S1 | L1 | asphere | 3.382 | 1.297 | Glass | 1.498 | 81.607 | 10.608 |
| S2 | | asphere | 8.199 | 0.416 | | | | |
| S3 | L2 | asphere | 9.411 | 0.345 | Plastic | 1.694 | 18.403 | -58.713 |
| S4 | | asphere | 7.530 | 0.298 | | | | |
| S5 | L3 | asphere | 18.564 | 0.535 | Plastic | 1.546 | 55.932 | 42.326 |
| S6 | | asphere | 93.365 | 0.100 | | | | |
| S7 | L4 | asphere | 18.143 | 0.503 | Plastic | 1.694 | 18.403 | -64.010 |
| S8 | | asphere | 12.735 | 0.747 | | | | |
| S9 | L5 | asphere | 1850.646 | 0.394 | Plastic | 1.570 | 37.403 | -16.654 |
| S10 | | asphere | 9.442 | 0.326 | | | | |
| S11 | L6 | asphere | 3.180 | 0.773 | Plastic | 1.546 | 55.932 | 5.792 |
| S12 | | asphere | -545.894 | 1.105 | | | | |
| S13 | L7 | asphere | 6.381 | 0.609 | Plastic | 1.546 | 55.932 | -6.703 |
| S14 | | asphere | 2.248 | 0.375 | | | | |
| S15 | Filter IR | sphere | Infinity | 0.310 | Glass | 1.518 | 64.197 | |
| S16 | | sphere | Infinity | 1.304 | | | | |

(continued)

| Third embodiment | | | | | | | | |
|---|---|---|---|---|---|---|---|---|
| EFL=8.300mm, FNO=1.6~2.0~2.8~4.0, FOV=87.6°, TTL=9.9mm | | | | | | | | |
| Surface numeral | Surface Name | Surface type | Y radius | Thickness | Material | Refractive index | Abbe number | Focal length |
| IMG | Image plane | sphere | Infinity | 0.025 | | | | |
| Reference wavelength: 555.0 nm | | | | | | | | |

Table 3b

| Adjustable aperture | First aperture | Second aperture | Third aperture | Fourth aperture |
|---|---|---|---|---|
| FNO | 1.60 | 2.00 | 2.80 | 4.00 |
| A | 0.09 | 0.03 | 0.03 | 0.03 |
| | -0.09 | -0.03 | -0.03 | -0.03 |

Table 3c provides the high-order term coefficients of the aspheric surfaces of each lens in the third embodiment. The aspheric surface shapes can be defined by the formula given in the first embodiment.

Table 3c

| Aspheric coefficient | | | | | |
|---|---|---|---|---|---|
| Surface number | K | A4 | A6 | A8 | A10 |
| S1 | -6.77732E-01 | 1.98424E-03 | 4.78068E-04 | -4.05939E-04 | 2.68790E-04 |
| S2 | 7.92790E-01 | -2.99124E-03 | -2.30440E-04 | 3.52729E-04 | -3.79948E-04 |
| S3 | -1.79429E+00 | -9.81128E-03 | -2.84723E-04 | 1.38483E-03 | -9.95853E-04 |
| S4 | 8.96047E-01 | -8.34825E-03 | 1.12254E-03 | -7.38336E-04 | 8.58637E-04 |
| S5 | 1.45012E+00 | 8.29790E-04 | -4.71632E-03 | 5.50975E-03 | -4.89352E-03 |
| S6 | -9.90000E-01 | 2.42589E-05 | -7.41270E-03 | 7.14836E-03 | -4.55661E-03 |
| S7 | -8.02338E+01 | -6.85227E-03 | -1.03399E-02 | 5.88594E-03 | -1.92252E-03 |
| S8 | -3.60633E+00 | -9.54327E-04 | -1.18866E-02 | 7.21462E-03 | -2.91288E-03 |
| S9 | -9.90000E+01 | -1.31641E-02 | 6.34047E-04 | 8.05415E-04 | -2.07715E-04 |
| S10 | -1.82465E+00 | -4.53579E-02 | -8.89712E-04 | 3.84982E-03 | -1.13296E-03 |
| S11 | -4.93337E+00 | 1.86976E-02 | -9.37763E-03 | 2.09636E-03 | -5.95094E-04 |
| S12 | 9.90000E+01 | 3.51364E-02 | 2.83327E-03 | -7.72297E-03 | 3.11416E-03 |
| S13 | -5.81518E-01 | -6.67593E-02 | 1.81499E-02 | -4.28704E-03 | 7.60469E-04 |
| S14 | -5.37990E+00 | -3.63256E-02 | 1.02379E-02 | -2.31686E-03 | 3.86548E-04 |
| Surface number | A12 | A14 | A16 | A18 | A20 |
| S1 | -1.02019E-04 | 2.26813E-05 | -2.83245E-06 | 1.67789E-07 | -2.60102E-09 |
| S2 | 2.18688E-04 | -7.15103E-05 | 1.32983E-05 | -1.31179E-06 | 5.43440E-08 |
| S3 | 5.03276E-04 | -1.50009E-04 | 2.52660E-05 | -2.18050E-06 | 7.37050E-08 |
| S4 | -4.53637E-04 | 1.46837E-04 | -2.78454E-05 | 2.70088E-06 | -8.92641E-08 |
| S5 | 2.66415E-03 | -9.19118E-04 | 1.95086E-04 | -2.33578E-05 | 1.21309E-06 |
| S6 | 1.81546E-03 | -4.67229E-04 | 7.47740E-05 | -6.82555E-06 | 2.77158E-07 |
| S7 | 2.34986E-04 | 5.86395E-05 | -2.70131E-05 | 3.91685E-06 | -2.03400E-07 |

(continued)

| Surface number | A12 | A14 | A16 | A18 | A20 |
|---|---|---|---|---|---|
| S8 | 7.80753E-04 | -1.35501E-04 | 1.45283E-05 | -8.69390E-07 | 2.21626E-08 |
| S9 | -1.10945E-05 | 1.06397E-05 | -1.65999E-06 | 1.11526E-07 | -2.82863E-09 |
| S10 | 1.63676E-04 | -1.30245E-05 | 5.60594E-07 | -1.13586E-08 | 6.49952E-11 |
| S11 | 1.98994E-04 | -4.89647E-05 | 7.92609E-06 | -8.57616E-07 | 6.33879E-08 |
| S12 | -7.08505E-04 | 1.06974E-04 | -1.13606E-05 | 8.69968E-07 | -4.83658E-08 |
| S13 | -9.10766E-05 | 7.32002E-06 | -3.99740E-07 | 1.47877E-08 | -3.55720E-10 |
| S14 | -4.63399E-05 | 4.00678E-06 | -2.52329E-07 | 1.16407E-08 | -3.92480E-10 |
| Surface number | A22 | A24 | A26 | A28 | A30 |
| S1 | 0.00000E+00 | 0.00000E+00 | 0.00000E+00 | 0.00000E+00 | 0.00000E+00 |
| S2 | 0.00000E+00 | 0.00000E+00 | 0.00000E+00 | 0.00000E+00 | 0.00000E+00 |
| S3 | 0.00000E+00 | 0.00000E+00 | 0.00000E+00 | 0.00000E+00 | 0.00000E+00 |
| S4 | 0.00000E+00 | 0.00000E+00 | 0.00000E+00 | 0.00000E+00 | 0.00000E+00 |
| S5 | 0.00000E+00 | 0.00000E+00 | 0.00000E+00 | 0.00000E+00 | 0.00000E+00 |
| S6 | 0.00000E+00 | 0.00000E+00 | 0.00000E+00 | 0.00000E+00 | 0.00000E+00 |
| S7 | 0.00000E+00 | 0.00000E+00 | 0.00000E+00 | 0.00000E+00 | 0.00000E+00 |
| S8 | 0.00000E+00 | 0.00000E+00 | 0.00000E+00 | 0.00000E+00 | 0.00000E+00 |
| S9 | 0.00000E+00 | 0.00000E+00 | 0.00000E+00 | 0.00000E+00 | 0.00000E+00 |
| S10 | 0.00000E+00 | 0.00000E+00 | 0.00000E+00 | 0.00000E+00 | 0.00000E+00 |
| S11 | -3.22029E-09 | 1.10840E-10 | -2.47333E-12 | 3.23248E-14 | -1.88026E-16 |
| S12 | 1.93642E-09 | -5.44304E-11 | 1.01927E-12 | -1.14139E-14 | 5.77867E-17 |
| S13 | 4.77136E-12 | -7.62574E-15 | -8.61144E-16 | 1.32640E-17 | -6.74911E-20 |
| S14 | 9.54040E-12 | -1.62274E-13 | 1.82442E-15 | -1.21032E-17 | 3.55502E-20 |

FIG. 12 (the first aperture state) shows the longitudinal spherical aberration curve diagram, the astigmatism curve diagram, and the distortion curve diagram of the optical system 10 of the third embodiment. It can be seen from the figure that the longitudinal spherical aberration, field curvature, and distortion of the optical system 10 are well controlled, and thus the optical system 10 of the illustrated embodiment has good imaging quality. Considering that stopping down the f-number can improve image quality without triggering the diffraction limit, the optical system 10 of the third embodiment also has excellent imaging quality in other aperture states.

Fourth Embodiment

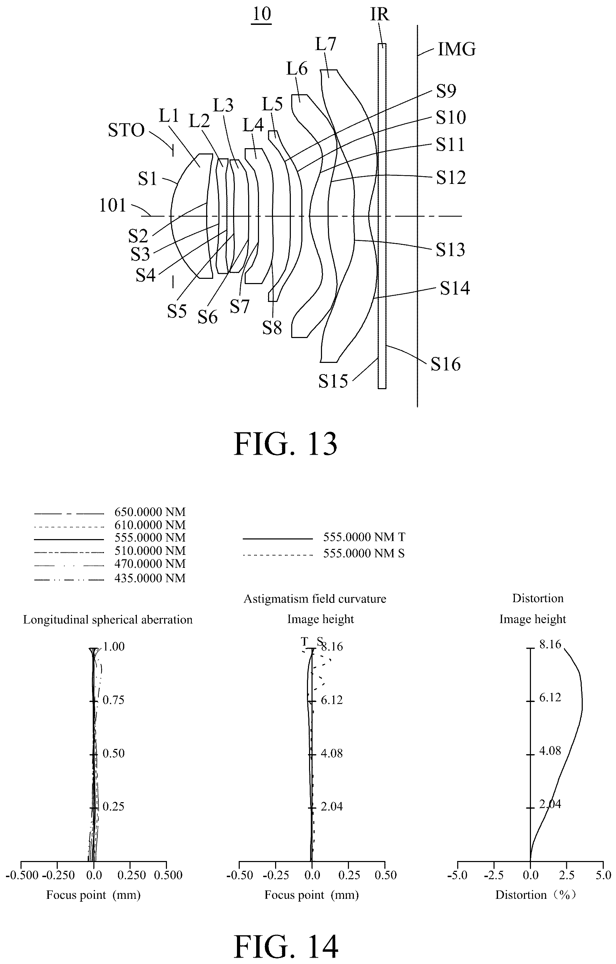

Referring to FIG. 13, an optical system 10 in the illustrated embodiment, along an optical axis 101 from an object side to an image side, sequentially includes a first lens L1, a second lens L2, a third lens L3, a fourth lens L4, a fifth lens L5, a sixth lens L6, and a seventh lens L7.

The first lens L1 has positive refractive power. An object side surface S1 is convex near the optical axis 101, and an imaging side surface S2 of the first lens L1 is concave near the optical axis 101.

The second lens L2 has negative refractive power. An object side surface S3 of the second lens L2 is concave near the optical axis 101, and an imaging side surface S4 of the second lens L2 is convex near the optical axis 101.

The third lens L3 has positive refractive power. An object side surface S5 of the third lens L3 is convex near the optical axis 101, and an imaging side surface S6 of the third lens L3 is convex near the optical axis 101.

The fourth lens L4 has negative refractive power. An object side surface S7 of the fourth lens L4 is convex near the optical axis 101, and an imaging side surface S8 of the fourth lens L4 is concave near the optical axis 101.

The fifth lens L5 has negative refractive power. An object side surface S9 of the fifth lens L5 is convex near the optical axis 101, and an imaging side surface S10 of the fifth lens L5 is concave near the optical axis 101.

The sixth lens L6 has positive refractive power. An object side surface S11 of the sixth lens L6 is convex near the optical axis 101, and an imaging side surface S12 of the sixth lens L6 is concave near the optical axis 101.

The seventh lens L7 has negative refractive power. An object side surface S13 of the seventh lens L7 is convex near the optical axis 101, and an imaging side surface S14 of the seventh lens L7 is concave near the optical axis 101.

In addition, the optical system 10 further includes an adjustable aperture STO, a filter IR, and an image plane IMG.

In the illustrated embodiment, the arrangements of the adjustable aperture STO, the filter IR, and the image plane IMG are approximately the same as those in the first embodiment, and can be referred to in the first embodiment, so no further description is provided. The differences are detailed in the table.

Table 4a

| Fourth embodiment | | | | | | | | |
|---|---|---|---|---|---|---|---|---|
| EFL=8.541mm, FNO=1.6~2.0~2.8~4.0, FOV=86.0°, TTL=10.33mm | | | | | | | | |
| Surface numeral | Surface Name | Surface type | Y radius | Thickness | Material | Refractive index | Abbe number | Focal length |
| | Object side | sphere | Infinity | Infinity | | | | |
| STO | Adjustable aperture | sphere | Infinity | A | | | | |
| S1 | L1 | asphere | 3.528 | 1.488 | Glass | 1.517 | 63.989 | 10.064 |
| S2 | | asphere | 9.370 | 0.519 | | | | |
| S3 | L2 | asphere | -31.526 | 0.336 | Plastic | 1.694 | 18.403 | -46.163 |
| S4 | | asphere | -2000.000 | 0.185 | | | | |
| S5 | L3 | asphere | 26.940 | 0.628 | Plastic | 1.546 | 55.932 | 35.391 |
| S6 | | asphere | -67.823 | 0.100 | | | | |
| S7 | L4 | asphere | 26.665 | 0.593 | Plastic | 1.694 | 18.403 | -50.037 |
| S8 | | asphere | 14.945 | 0.754 | | | | |
| S9 | L5 | asphere | 259.522 | 0.468 | Plastic | 1.570 | 37.403 | -17.650 |
| S10 | | asphere | 9.677 | 0.342 | | | | |
| S11 | L6 | asphere | 3.323 | 0.769 | Plastic | 1.546 | 55.932 | 6.157 |
| S12 | | asphere | 263.272 | 1.069 | | | | |
| S13 | L7 | asphere | 6.386 | 0.634 | Plastic | 1.546 | 55.932 | -6.896 |
| S14 | | asphere | 2.286 | 0.400 | | | | |
| S15 | Filter IR | sphere | Infinity | 0.310 | Glass | 1.518 | 64.197 | |
| S16 | | sphere | Infinity | 1.304 | | | | |
| IMG | Image plane | sphere | Infinity | 0.025 | | | | |
| Reference wavelength: 555.0 nm | | | | | | | | |

Table 4b

| Adjustable aperture | First aperture | Second aperture | Third aperture | Fourth aperture |
|---|---|---|---|---|
| FNO | 1.60 | 2.00 | 2.80 | 4.00 |
| A | 0.09 | 0.03 | 0.03 | 0.03 |
| | -0.09 | -0.03 | -0.03 | -0.03 |

Table 4c provides the high-order term coefficients of the aspheric surfaces of each lens in the fourth embodiment. The aspheric surface shapes can be defined by the formula given in the first embodiment.

Table 4c

| Aspheric coefficient | | | | | |
|---|---|---|---|---|---|
| Surface number | K | A4 | A6 | A8 | A10 |
| S1 | -6.92144E-01 | 1.72222E-03 | 7.40512E-04 | -7.30238E-04 | 4.97274E-04 |
| S2 | 5.27548E-01 | -1.58126E-03 | -8.28168E-04 | 7.42962E-04 | -5.29569E-04 |
| S3 | -9.90000E+01 | -9.48089E-03 | 6.73391E-04 | 2.57976E-04 | -4.29475E-06 |
| S4 | -9.90000E+01 | -6.97044E-03 | -1.08487E-03 | 2.05477E-03 | -1.30753E-03 |
| S5 | -5.46380E+01 | 1.77980E-03 | -4.10933E-03 | 2.20625E-03 | -1.34393E-03 |
| S6 | 9.90000E+01 | 2.55475E-03 | -8.12139E-03 | 6.79037E-03 | -4.15473E-03 |
| S7 | -6.42247E+01 | -8.57681E-03 | -7.11458E-03 | 3.73578E-03 | -1.11493E-03 |
| S8 | -3.74570E+00 | -3.87852E-03 | -7.68589E-03 | 4.57375E-03 | -1.86262E-03 |
| S9 | -9.90000E+01 | -1.50573E-02 | 2.96861E-03 | -3.08488E-04 | 1.08969E-05 |
| S10 | -1.29625E+00 | -4.34700E-02 | 1.93171E-03 | 2.14841E-03 | -6.93909E-04 |
| S11 | -4.99107E+00 | 1.56516E-02 | -6.19211E-03 | 5.24496E-04 | -1.32395E-05 |
| S12 | -5.38033E+01 | 3.21560E-02 | 3.17831E-03 | -6.94825E-03 | 2.64689E-03 |
| S13 | -5.83920E-01 | -6.00329E-02 | 1.58594E-02 | -3.71438E-03 | 6.61754E-04 |
| S14 | -5.18519E+00 | -3.28466E-02 | 9.10092E-03 | -2.07695E-03 | 3.56582E-04 |
| Surface number | A12 | A14 | A16 | A18 | A20 |
| S1 | -2.00720E-04 | 4.91996E-05 | -7.15257E-06 | 5.62404E-07 | -1.83160E-08 |
| S2 | 2.10699E-04 | -4.79666E-05 | 5.73545E-06 | -2.68483E-07 | -4.20380E-10 |
| S3 | -2.54162E-05 | 1.19830E-05 | -2.93422E-06 | 4.11403E-07 | -2.38112E-08 |
| S4 | 5.96972E-04 | -1.76618E-04 | 3.21405E-05 | -3.25047E-06 | 1.42386E-07 |
| S5 | 5.24606E-04 | -1.30940E-04 | 1.90032E-05 | -1.36390E-06 | 3.51537E-08 |
| S6 | 1.59843E-03 | -3.92626E-04 | 5.85014E-05 | -4.72161E-06 | 1.55695E-07 |
| S7 | 1.10198E-04 | 4.00108E-05 | -1.64626E-05 | 2.39455E-06 | -1.28999E-07 |
| S8 | 5.13494E-04 | -9.27674E-05 | 1.04436E-05 | -6.61457E-07 | 1.79804E-08 |
| S9 | -1.86794E-05 | 6.42837E-06 | -8.97031E-07 | 5.83932E-08 | -1.46125E-09 |
| S10 | 1.02587E-04 | -8.36697E-06 | 3.82353E-07 | -9.03151E-09 | 8.28784E-11 |
| S11 | 2.99188E-05 | -1.21268E-05 | 2.17239E-06 | -2.24689E-07 | 1.46183E-08 |
| S12 | -5.71859E-04 | 8.20934E-05 | -8.29930E-06 | 6.05992E-07 | -3.21892E-08 |
| S13 | -8.12804E-05 | 6.93411E-06 | -4.23134E-07 | 1.88922E-08 | -6.23003E-10 |
| S14 | -4.45799E-05 | 4.05835E-06 | -2.71072E-07 | 1.33419E-08 | -4.82291E-10 |
| Surface number | A22 | A24 | A26 | A28 | A30 |
| S1 | 0.00000E+00 | 0.00000E+00 | 0.00000E+00 | 0.00000E+00 | 0.00000E+00 |
| S2 | 0.00000E+00 | 0.00000E+00 | 0.00000E+00 | 0.00000E+00 | 0.00000E+00 |
| S3 | 0.00000E+00 | 0.00000E+00 | 0.00000E+00 | 0.00000E+00 | 0.00000E+00 |
| S4 | 0.00000E+00 | 0.00000E+00 | 0.00000E+00 | 0.00000E+00 | 0.00000E+00 |
| S5 | 0.00000E+00 | 0.00000E+00 | 0.00000E+00 | 0.00000E+00 | 0.00000E+00 |
| S6 | 0.00000E+00 | 0.00000E+00 | 0.00000E+00 | 0.00000E+00 | 0.00000E+00 |
| S7 | 0.00000E+00 | 0.00000E+00 | 0.00000E+00 | 0.00000E+00 | 0.00000E+00 |
| S8 | 0.00000E+00 | 0.00000E+00 | 0.00000E+00 | 0.00000E+00 | 0.00000E+00 |

(continued)

| Surface number | A22 | A24 | A26 | A28 | A30 |
|---|---|---|---|---|---|
| S9 | 0.00000E+00 | 0.00000E+00 | 0.00000E+00 | 0.00000E+00 | 0.00000E+00 |
| S10 | 0.00000E+00 | 0.00000E+00 | 0.00000E+00 | 0.00000E+00 | 0.00000E+00 |
| S11 | -6.09867E-10 | 1.58607E-11 | -2.33423E-13 | 1.44697E-15 | 8.99574E-19 |
| S12 | 1.23415E-09 | -3.32988E-11 | 5.99939E-13 | -6.47789E-15 | 3.16875E-17 |
| S13 | 1.50800E-11 | -2.61200E-13 | 3.06728E-15 | -2.18652E-17 | 7.13436E-20 |
| S14 | 1.26278E-11 | -2.32613E-13 | 2.85398E-15 | -2.09050E-17 | 6.90647E-20 |

FIG. 14 (the first aperture state) shows the longitudinal spherical aberration curve diagram, the astigmatism curve diagram, and the distortion curve diagram of the optical system 10 of the fourth embodiment. It can be seen from the figure that the longitudinal spherical aberration, field curvature, and distortion of the optical system 10 are well controlled, and thus the optical system 10 of the illustrated embodiment has excellent imaging quality. Considering that stopping down the f-number can improve image quality without triggering the diffraction limit, the optical system 10 of the fourth embodiment also has excellent imaging quality in other aperture states.

Fifth Embodiment

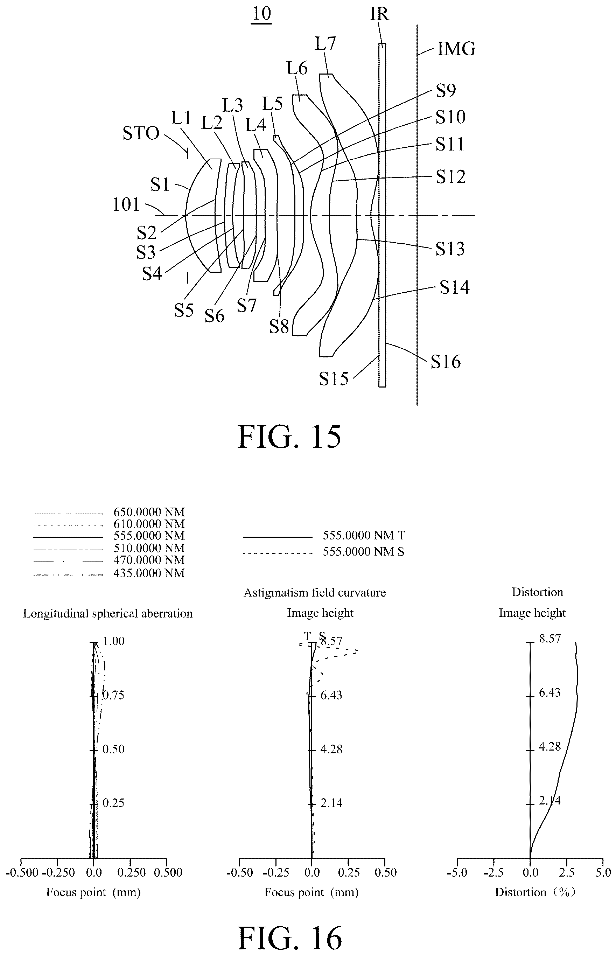

Referring to FIG. 15, an optical system 10 in the illustrated embodiment, along an optical axis 101 from an object side to an image side, sequentially includes a first lens L1, a second lens L2, a third lens L3, a fourth lens L4, a fifth lens L5, a sixth lens L6, and a seventh lens L7.

The first lens L1 has positive refractive power. An object side surface S1 is convex near the optical axis 101, and an imaging side surface S2 of the first lens L1 is concave near the optical axis 101.

The second lens L2 has negative refractive power. An object side surface S3 of the second lens L2 is convex near the optical axis 101, and an imaging side surface S4 of the second lens L2 is concave near the optical axis 101.

The third lens L3 has positive refractive power. An object side surface S5 of the third lens L3 is convex near the optical axis 101, and an imaging side surface S6 of the third lens L3 is convex near the optical axis 101.

The fourth lens L4 has negative refractive power. An object side surface S7 of the fourth lens L4 is convex near the optical axis 101, and an imaging side surface S8 of the fourth lens L4 is concave near the optical axis 101.

The fifth lens L5 has negative refractive power. An object side surface S9 of the fifth lens L5 is concave near the optical axis 101, and an imaging side surface S10 of the fifth lens L5 is concave near the optical axis 101.

The sixth lens L6 has positive refractive power. An object side surface S11 of the sixth lens L6 is convex near the optical axis 101, and an imaging side surface S12 of the sixth lens L6 is convex near the optical axis 101.

The seventh lens L7 has negative refractive power. An object side surface S13 of the seventh lens L7 is convex near the optical axis 101, and an imaging side surface S14 of the seventh lens L7 is concave near the optical axis 101.

In addition, the optical system 10 further includes an adjustable aperture STO, a filter IR, and an image plane IMG.

In the illustrated embodiment, the arrangements of the adjustable aperture STO, the filter IR, and the image plane IMG are approximately the same as those in the first embodiment, and can be referred to in the first embodiment, so no further description is provided. The differences are detailed in the table.

Table 5a

| Fifth embodiment | | | | | | | | |
|---|---|---|---|---|---|---|---|---|
| EFL=8.500mm, FNO=1.6~2.0~2.8~4.0, FOV=88.7°, TTL=10.44mm | | | | | | | | |
| Surface numeral | Surface Name | Surface type | Y radius | Thickness | Material | Refractive index | Abbe number | Focal length |
|  | Object side | sphere | Infinity | Infinity |  |  |  |  |
| STO | Adjustable aperture | sphere | Infinity | A |  |  |  |  |
| S1 | L1 | asphere | 3.540 | 1.292 | Glass | 1.498 | 81.607 | 11.200 |
| S2 |  | asphere | 8.511 | 0.421 |  |  |  |  |

(continued)

| Fifth embodiment | | | | | | | | |
|---|---|---|---|---|---|---|---|---|
| EFL=8.500mm, FNO=1.6~2.0~2.8~4.0, FOV=88.7°, TTL=10.44mm | | | | | | | | |
| Surface numeral | Surface Name | Surface type | Y radius | Thickness | Material | Refractive index | Abbe number | Focal length |
| S3 | L2 | asphere | 9.554 | 0.366 | Plastic | 1.694 | 18.403 | -68.176 |
| S4 | | asphere | 7.824 | 0.333 | | | | |
| S5 | L3 | asphere | 30.314 | 0.567 | Plastic | 1.546 | 55.932 | 44.638 |
| S6 | | asphere | -123.616 | 0.100 | | | | |
| S7 | L4 | asphere | 19.687 | 0.528 | Plastic | 1.694 | 18.403 | -67.113 |
| S8 | | asphere | 13.686 | 0.798 | | | | |
| S9 | L5 | asphere | -1141.958 | 0.369 | Plastic | 1.570 | 37.403 | -15.740 |
| S10 | | asphere | 9.042 | 0.341 | | | | |
| S11 | L6 | asphere | 3.195 | 0.853 | Plastic | 1.546 | 55.932 | 5.822 |
| S12 | | asphere | -582.682 | 1.194 | | | | |
| S13 | L7 | asphere | 6.658 | 0.644 | Plastic | 1.546 | 55.932 | -7.133 |
| S14 | | asphere | 2.374 | 0.349 | | | | |
| S15 | Filter IR | sphere | Infinity | 0.310 | Glass | 1.518 | 64.197 | |
| S16 | | sphere | Infinity | 1.370 | | | | |
| IMG | Image plane | sphere | Infinity | 0.026 | | | | |
| Reference wavelength: 555.0 nm | | | | | | | | |

Table 5b

| Adjustable aperture | First aperture | Second aperture | Third aperture | Fourth aperture |
|---|---|---|---|---|
| FNO | 1.60 | 2.00 | 2.80 | 4.00 |
| A | 0.09 | 0.03 | 0.03 | 0.03 |
| | -0.09 | -0.03 | -0.03 | -0.03 |

Table 5c provides the high-order term coefficients of the aspheric surfaces of each lens in the fifth embodiment. The aspheric surface shapes can be defined by the formula given in the first embodiment.

Table 5c

| Aspheric coefficient | | | | | |
|---|---|---|---|---|---|
| Surface number | K | A4 | A6 | A8 | A10 |
| S1 | -6.59223E-01 | 1.78473E-03 | 2.59697E-04 | -1.41460E-04 | 8.26747E-05 |
| S2 | 6.84742E-01 | -2.82317E-03 | -5.21260E-04 | 6.58436E-04 | -5.19641E-04 |
| S3 | -3.34921E+00 | -9.15160E-03 | 4.38722E-04 | 4.46543E-05 | 6.06764E-05 |
| S4 | 1.04467E+00 | -7.71806E-03 | 1.65824E-03 | -1.65367E-03 | 1.48861E-03 |
| S5 | -6.68045E-01 | 6.85969E-04 | -3.42217E-03 | 4.09720E-03 | -3.62840E-03 |
| S6 | -2.52672E+01 | -6.42028E-04 | -5.90882E-03 | 5.35747E-03 | -3.11685E-03 |
| S7 | -9.90000E+01 | -5.83570E-03 | -9.84351E-03 | 5.78342E-03 | -2.12328E-03 |
| S8 | -4.67753E+00 | 3.10902E-04 | -1.08235E-02 | 6.07940E-03 | -2.24826E-03 |

(continued)

| Aspheric coefficient | | | | | |
|---|---|---|---|---|---|
| Surface number | K | A4 | A6 | A8 | A10 |
| S9 | -9.90000E+01 | -7.45864E-03 | -2.98222E-03 | 2.13008E-03 | -5.56277E-04 |
| S10 | -3.94708E+00 | -3.58658E-02 | -4.29677E-03 | 4.17697E-03 | -1.06861E-03 |
| S11 | -4.79880E+00 | 1.53677E-02 | -6.31564E-03 | 7.67862E-04 | -1.02220E-04 |
| S12 | 9.90000E+01 | 2.69623E-02 | 4.91993E-03 | -6.75006E-03 | 2.38732E-03 |
| S13 | -6.10428E-01 | -5.73131E-02 | 1.43166E-02 | -3.33862E-03 | 6.08029E-04 |
| S14 | -4.93759E+00 | -3.24455E-02 | 8.58268E-03 | -1.86727E-03 | 3.03267E-04 |
| Surface number | A12 | A14 | A16 | A18 | A20 |
| S1 | -2.76666E-05 | 5.43514E-06 | -5.91372E-07 | 2.65886E-08 | 1.14787E-10 |
| S2 | 2.42001E-04 | -6.70309E-05 | 1.08099E-05 | -9.30181E-07 | 3.32085E-08 |
| S3 | -9.41581E-06 | 1.58826E-06 | -1.10850E-06 | 2.76719E-07 | -2.06605E-08 |
| S4 | -7.34476E-04 | 2.26612E-04 | -4.23417E-05 | 4.32182E-06 | -1.79932E-07 |
| S5 | 1.91115E-03 | -6.26824E-04 | 1.25090E-04 | -1.39835E-05 | 6.74588E-07 |
| S6 | 1.11436E-03 | -2.54047E-04 | 3.56002E-05 | -2.82236E-06 | 9.95921E-08 |
| S7 | 4.39893E-04 | -3.26113E-05 | -5.19835E-06 | 1.22936E-06 | -7.04164E-08 |
| S8 | 5.50358E-04 | -8.73504E-05 | 8.58617E-06 | -4.72227E-07 | 1.10835E-08 |
| S9 | 6.92678E-05 | -3.41177E-06 | -1.06665E-07 | 1.81895E-08 | -5.34235E-10 |
| S10 | 1.47213E-04 | -1.20751E-05 | 5.99111E-07 | -1.69930E-08 | 2.16383E-10 |
| S11 | 4.81474E-05 | -1.48916E-05 | 2.55430E-06 | -2.71940E-07 | 1.91079E-08 |
| S12 | -4.90706E-04 | 6.74248E-05 | -6.53305E-06 | 4.56889E-07 | -2.32021E-08 |
| S13 | -7.69840E-05 | 6.83373E-06 | -4.39001E-07 | 2.08655E-08 | -7.38307E-10 |
| S14 | -3.56264E-05 | 3.04108E-06 | -1.90832E-07 | 8.86195E-09 | -3.03840E-10 |
| Surface number | A22 | A24 | A26 | A28 | A30 |
| S1 | 0.00000E+00 | 0.00000E+00 | 0.00000E+00 | 0.00000E+00 | 0.00000E+00 |
| S2 | 0.00000E+00 | 0.00000E+00 | 0.00000E+00 | 0.00000E+00 | 0.00000E+00 |
| S3 | 0.00000E+00 | 0.00000E+00 | 0.00000E+00 | 0.00000E+00 | 0.00000E+00 |
| S4 | 0.00000E+00 | 0.00000E+00 | 0.00000E+00 | 0.00000E+00 | 0.00000E+00 |
| S5 | 0.00000E+00 | 0.00000E+00 | 0.00000E+00 | 0.00000E+00 | 0.00000E+00 |
| S6 | 0.00000E+00 | 0.00000E+00 | 0.00000E+00 | 0.00000E+00 | 0.00000E+00 |
| S7 | 0.00000E+00 | 0.00000E+00 | 0.00000E+00 | 0.00000E+00 | 0.00000E+00 |
| S8 | 0.00000E+00 | 0.00000E+00 | 0.00000E+00 | 0.00000E+00 | 0.00000E+00 |
| S9 | 0.00000E+00 | 0.00000E+00 | 0.00000E+00 | 0.00000E+00 | 0.00000E+00 |
| S10 | 0.00000E+00 | 0.00000E+00 | 0.00000E+00 | 0.00000E+00 | 0.00000E+00 |
| S11 | -9.06597E-10 | 2.88560E-11 | -5.92033E-13 | 7.09049E-15 | -3.77253E-17 |
| S12 | 8.48315E-10 | -2.17632E-11 | 3.71694E-13 | -3.79320E-15 | 1.74885E-17 |
| S13 | 1.92409E-11 | -3.58510E-13 | 4.51147E-15 | -3.42823E-17 | 1.18593E-19 |
| S14 | 7.58604E-12 | -1.33929E-13 | 1.58213E-15 | -1.12045E-17 | 3.59214E-20 |

FIG. 16 (the first aperture state) shows the longitudinal spherical aberration curve diagram, the astigmatism curve diagram, and the distortion curve diagram of the optical system 10 of the fifth embodiment. It can be seen from the figure that the longitudinal spherical aberration, field curvature, and distortion of the optical system 10 are well controlled, and thus the optical system 10 of the illustrated embodiment has excellent imaging quality. Considering that stopping down the f-number can improve image quality without triggering the diffraction limit, the optical system 10 of the fifth embodiment also has excellent imaging quality in other aperture states.

Sixth Embodiment

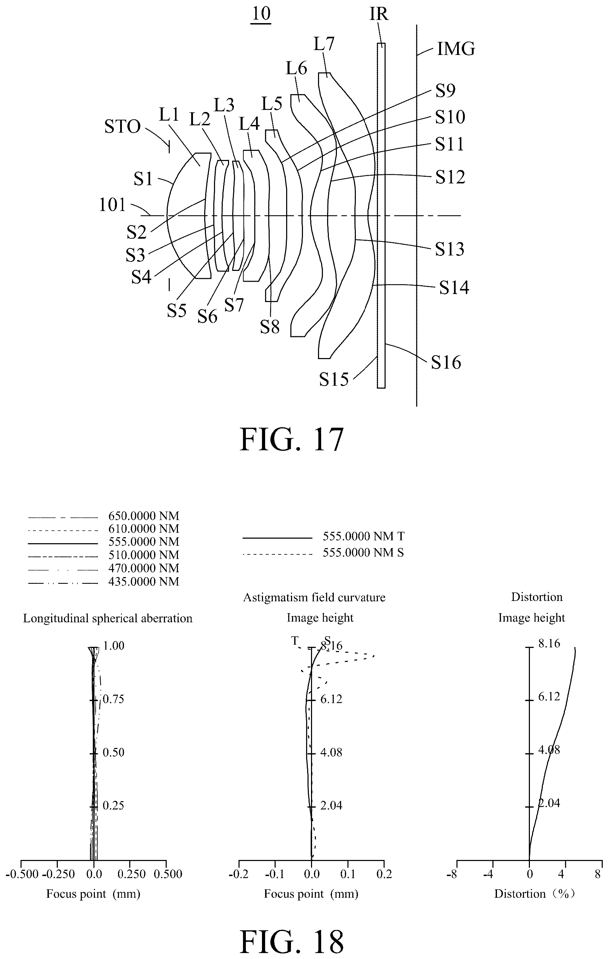

Referring to FIG. 17, an optical system 10 in the illustrated embodiment, along an optical axis 101 from an object side to an image side, sequentially includes a first lens L1, a second lens L2, a third lens L3, a fourth lens L4, a fifth lens L5, a sixth lens L6, and a seventh lens L7.

The first lens L1 has positive refractive power. An object side surface S1 is convex near the optical axis 101, and an imaging side surface S2 of the first lens L1 is concave near the optical axis 101.

The second lens L2 has negative refractive power. An object side surface S3 of the second lens L2 is convex near the optical axis 101, and an imaging side surface S4 of the second lens L2 is concave near the optical axis 101.

The third lens L3 has positive refractive power. An object side surface S5 of the third lens L3 is convex near the optical axis 101, and an imaging side surface S6 of the third lens L3 is concave near the optical axis 101.

The fourth lens L4 has negative refractive power. An object side surface S7 of the fourth lens L4 is convex near the optical axis 101, and an imaging side surface S8 of the fourth lens L4 is concave near the optical axis 101.

The fifth lens L5 has negative refractive power. An object side surface S9 of the fifth lens L5 is convex near the optical axis 101, and an imaging side surface S10 of the fifth lens L5 is concave near the optical axis 101.

The sixth lens L6 has positive refractive power. An object side surface S11 of the sixth lens L6 is convex near the optical axis 101, and an imaging side surface S12 of the sixth lens L6 is concave near the optical axis 101.

The seventh lens L7 has negative refractive power. An object side surface S13 of the seventh lens L7 is convex near the optical axis 101, and an imaging side surface S14 of the seventh lens L7 is concave near the optical axis 101.

In addition, the optical system 10 further includes an adjustable aperture STO, a filter IR, and an image plane IMG.

In the illustrated embodiment, the arrangements of the adjustable aperture STO, the filter IR, and the image plane IMG are approximately the same as those in the first embodiment, and can be referred to in the first embodiment, so no further description is provided. The differences are detailed in the table.

Table 6a

| Sixth embodiment | | | | | | | | |
|---|---|---|---|---|---|---|---|---|
| EFL=8.958mm, FNO=1.6~2.0~2.8~4.0, FOV=81.9°, TTL=10.45mm | | | | | | | | |
| Surface numeral | Surface Name | Surface type | Y radius | Thickness | Material | Refractive index | Abbe number | Focal length |
|  | Object side | sphere | Infinity | Infinity |  |  |  |  |
| STO | Adjustable aperture | sphere | Infinity | A |  |  |  |  |
| S1 | L1 | asphere | 3.534 | 1.575 | Glass | 1.517 | 63.989 | 10.059991 |
| S2 |  | asphere | 9.343 | 0.375 |  |  |  |  |
| S3 | L2 | asphere | 13.847 | 0.349 | Plastic | 1.694 | 18.403 | 40.645135 |
| S4 |  | asphere | 9.191 | 0.312 |  |  |  |  |
| S5 | L3 | asphere | 14.087 | 0.463 | Plastic | 1.546 | 55.932 | 36.062194 |
| S6 |  | asphere | 48.910 | 0.101 |  |  |  |  |
| S7 | L4 | asphere | 33.529 | 0.590 | Plastic | 1.694 | 18.403 | 41.249887 |
| S8 |  | asphere | 15.330 | 0.756 |  |  |  |  |
| S9 | L5 | asphere | 104.090 | 0.633 | Plastic | 1.570 | 37.403 | 20.210744 |
| S10 |  | asphere | 10.348 | 0.357 |  |  |  |  |
| S11 | L6 | asphere | 3.462 | 0.724 | Plastic | 1.546 | 55.932 | 6.377069 |
| S12 |  | asphere | 535.324 | 1.128 |  |  |  |  |

(continued)

| Sixth embodiment | | | | | | | | |
|---|---|---|---|---|---|---|---|---|
| EFL=8.958mm, FNO=1.6~2.0~2.8~4.0, FOV=81.9°, TTL=10.45mm | | | | | | | | |
| Surface numeral | Surface Name | Surface type | Y radius | Thickness | Material | Refractive index | Abbe number | Focal length |
| S13 | L7 | asphere | 6.494 | 0.563 | Plastic | 1.546 | 55.932 | -6.775955 |
| S14 | | asphere | 2.285 | 0.408 | | | | |
| S15 | Filter IR | sphere | Infinity | 0.310 | Glass | 1.518 | 64.197 | |
| S16 | | sphere | Infinity | 1.304 | | | | |
| IMG | Image plane | sphere | Infinity | 0.025 | | | | |

| Reference wavelength: 555.0 nm |
|---|

Table 5b

| Adjustable aperture | First aperture | Second aperture | Third aperture | Fourth aperture |
|---|---|---|---|---|
| FNO | 1.60 | 2.00 | 2.80 | 4.00 |
| A | 0.09 | 0.03 | 0.03 | 0.03 |
| | -0.09 | -0.03 | -0.03 | -0.03 |

Table 6c provides the high-order term coefficients of the aspheric surfaces of each lens in the sixth embodiment. The aspheric surface shapes can be defined by the formula given in the first embodiment.

Table 6c

| Aspheric coefficient | | | | | |
|---|---|---|---|---|---|
| Surface number | K | A4 | A6 | A8 | A10 |
| S1 | -7.03281E-01 | 1.93336E-03 | 1.57700E-04 | -2.23477E-05 | 4.71020E-06 |
| S2 | 9.62755E-01 | -2.86167E-03 | -4.35005E-04 | 6.30494E-04 | -5.11149E-04 |
| S3 | -9.13635E-01 | -9.90052E-03 | 1.02316E-04 | 1.28537E-03 | -8.43387E-04 |
| S4 | 6.11787E-01 | -8.17693E-03 | 8.38177E-04 | -5.51321E-05 | 4.07333E-04 |
| S5 | -9.19371E-02 | 2.09887E-03 | -5.70268E-03 | 4.37201E-03 | -2.50509E-03 |
| S6 | -2.39724E+01 | 3.07848E-03 | -8.68149E-03 | 6.27974E-03 | -3.03638E-03 |
| S7 | -6.59640E+01 | -7.79788E-03 | -7.78600E-03 | 3.84132E-03 | -9.95917E-04 |
| S8 | -5.47960E+00 | -4.19562E-03 | -7.86526E-03 | 4.58846E-03 | -1.80664E-03 |
| S9 | -9.90000E+01 | -1.59220E-02 | 3.48402E-03 | -7.03720E-04 | 1.68730E-04 |
| S10 | -2.05641E-01 | -4.32115E-02 | 2.63369E-03 | 1.72586E-03 | -5.71487E-04 |
| S11 | -5.04284E+00 | 1.61854E-02 | -6.36462E-03 | 5.80989E-04 | -1.46211E-04 |
| S12 | 9.90000E+01 | 3.43816E-02 | 3.11761E-03 | -7.62968E-03 | 3.00450E-03 |
| S13 | -5.84175E-01 | -6.86819E-02 | 2.05128E-02 | -5.07167E-03 | 9.07292E-04 |
| S14 | -5.76261E+00 | -3.74937E-02 | 1.11421E-02 | -2.64154E-03 | 4.60707E-04 |
| Surface number | A12 | A14 | A16 | A18 | A20 |
| S1 | 1.99388E-06 | -1.22225E-06 | 2.60754E-07 | -2.71632E-08 | 1.14116E-09 |
| S2 | 2.39061E-04 | -6.66907E-05 | 1.09491E-05 | -9.67510E-07 | 3.54431E-08 |

(continued)

| Surface number | A12 | A14 | A16 | A18 | A20 |
|---|---|---|---|---|---|
| S3 | 3.67533E-04 | -9.99000E-05 | 1.63320E-05 | -1.44812E-06 | 5.31627E-08 |
| S4 | -3.08008E-04 | 1.20007E-04 | -2.60222E-05 | 2.99237E-06 | -1.39466E-07 |
| S5 | 8.70920E-04 | -1.85687E-04 | 2.21875E-05 | -1.18802E-06 | 1.34983E-08 |
| S6 | 8.85575E-04 | -1.52958E-04 | 1.27172E-05 | -5.20579E-08 | -4.05637E-08 |
| S7 | 2.53049E-05 | 6.82394E-05 | -2.16011E-05 | 2.86076E-06 | -1.44257E-07 |
| S8 | 4.80009E-04 | -8.39706E-05 | 9.21855E-06 | -5.74310E-07 | 1.55614E-08 |
| S9 | -5.75944E-05 | 1.23559E-05 | -1.44219E-06 | 8.62949E-08 | -2.06896E-09 |
| S10 | 8.19320E-05 | -6.26687E-06 | 2.56166E-07 | -4.92853E-09 | 2.77536E-11 |
| S11 | 1.11643E-04 | -3.69402E-05 | 6.71843E-06 | -7.69586E-07 | 5.88816E-08 |
| S12 | -6.67837E-04 | 9.84365E-05 | -1.02036E-05 | 7.63068E-07 | -4.14768E-08 |
| S13 | -1.10181E-04 | 9.20178E-06 | -5.42452E-07 | 2.30050E-08 | -7.07247E-10 |
| S14 | -5.82578E-05 | 5.38480E-06 | -3.67059E-07 | 1.85114E-08 | -6.87384E-10 |
| Surface number | A22 | A24 | A26 | A28 | A30 |
| S1 | 0.00000E+00 | 0.00000E+00 | 0.00000E+00 | 0.00000E+00 | 0.00000E+00 |
| S2 | 0.00000E+00 | 0.00000E+00 | 0.00000E+00 | 0.00000E+00 | 0.00000E+00 |
| S3 | 0.00000E+00 | 0.00000E+00 | 0.00000E+00 | 0.00000E+00 | 0.00000E+00 |
| S4 | 0.00000E+00 | 0.00000E+00 | 0.00000E+00 | 0.00000E+00 | 0.00000E+00 |
| S5 | 0.00000E+00 | 0.00000E+00 | 0.00000E+00 | 0.00000E+00 | 0.00000E+00 |
| S6 | 0.00000E+00 | 0.00000E+00 | 0.00000E+00 | 0.00000E+00 | 0.00000E+00 |
| S7 | 0.00000E+00 | 0.00000E+00 | 0.00000E+00 | 0.00000E+00 | 0.00000E+00 |
| S8 | 0.00000E+00 | 0.00000E+00 | 0.00000E+00 | 0.00000E+00 | 0.00000E+00 |
| S9 | 0.00000E+00 | 0.00000E+00 | 0.00000E+00 | 0.00000E+00 | 0.00000E+00 |
| S10 | 0.00000E+00 | 0.00000E+00 | 0.00000E+00 | 0.00000E+00 | 0.00000E+00 |
| S11 | -3.06885E-09 | 1.08004E-10 | -2.46252E-12 | 3.29047E-14 | -1.95939E-16 |
| S12 | 1.62621E-09 | -4.48502E-11 | 8.25801E-13 | -9.11192E-15 | 4.55507E-17 |
| S13 | 1.56752E-11 | -2.44900E-13 | 2.56727E-15 | -1.62589E-17 | 4.71773E-20 |
| S14 | 1.85127E-11 | -3.50976E-13 | 4.43239E-15 | -3.34125E-17 | 1.13565E-19 |

FIG. 18 (the first aperture state) shows the longitudinal spherical aberration curve diagram, the astigmatism curve diagram, and the distortion curve diagram of the optical system 10 of the sixth embodiment. It can be seen from the figure that the longitudinal spherical aberration, field curvature, and distortion of the optical system 10 are well controlled, and thus the optical system 10 of the illustrated embodiment has excellent imaging quality. Considering that stopping down the f-number can improve image quality without triggering the diffraction limit, the optical system 10 of the sixth embodiment also has excellent imaging quality in other aperture states.

Table 7 shows the values of multiple conditional expressions in the optical systems of the first to sixth embodiments.

Table 7

| Conditional expression | Embodiment 1 | Embodiment 2 | Embodiment 3 | Embodiment 4 | Embodiment 5 | Embodiment 6 |
|---|---|---|---|---|---|---|
| FOV | 86° | 84.6° | 87.6° | 86° | 88.7° | 81.9° |
| FOV/(FNOmax-FNOmin) | 35.1020 | 34.8148 | 36.5000 | 36.1345 | 37.5847 | 34.8511 |

(continued)

| Conditional expression | Embodiment 1 | Embodiment 2 | Embodiment 3 | Embodiment 4 | Embodiment 5 | Embodiment 6 |
|---|---|---|---|---|---|---|
| TTL/ImgH | 1.2439 | 1.2806 | 1.2132 | 1.2659 | 1.2185 | 1.2806 |
| f1/f | 1.1694 | 1.1455 | 1.2781 | 1.1783 | 1.3177 | 1.1230 |
| f2/f | -4.2313 | -6.1181 | -7.0739 | -5.4049 | -8.0207 | -4.5373 |
| |f3|/f | 3.7484 | 29.1755 | 5.0995 | 4.1437 | 5.2515 | 4.0257 |
| |f4|/f | 6.5482 | 34.4829 | 7.7121 | 5.8585 | 7.8957 | 4.6048 |
| f5/f | -2.0570 | -1.9601 | -2.0065 | -2.0665 | -1.8518 | -2.2562 |
| f/f6 | 1.4063 | 1.4329 | 1.4329 | 1.3873 | 1.4600 | 1.4047 |
| f/f7 | -1.2570 | -1.2577 | -1.2383 | -1.2385 | -1.1916 | -1.3220 |
| f/R1 | 2.4709 | 2.3729 | 2.4539 | 2.4212 | 2.4011 | 2.5346 |
| R2/f | 1.0588 | 1.3989 | 0.9879 | 1.0971 | 1.0013 | 1.0430 |
| |R3|/f | 1.6437 | 1.1174 | 1.1339 | 3.6912 | 1.1240 | 1.5457 |
| |R4|/f | 1.0430 | 0.8716 | 0.9073 | 234.1646 | 0.9204 | 1.0260 |
| |R5|/f | 1.9205 | 12.5468 | 2.2366 | 3.1541 | 3.5663 | 1.5725 |
| |R6|/f | 30.6694 | 59.1515 | 11.2488 | 7.9408 | 14.5431 | 5.4600 |
| R7/f | 3.2608 | 1.6934 | 2.1860 | 3.1220 | 2.3161 | 3.7429 |
| R8/f | 1.8844 | 1.7939 | 1.5344 | 1.7498 | 1.6101 | 1.7113 |
| |R9|/f | 32.2117 | 57.4713 | 222.9694 | 30.3854 | 134.3480 | 11.6198 |
| R10/f | 1.2176 | 1.0955 | 1.1376 | 1.1330 | 1.0638 | 1.1551 |
| R11/f | 2.5493 | 2.6665 | 2.6101 | 2.5702 | 2.6604 | 2.5879 |
| |R12|/f | 35.6461 | 21.4515 | 65.7703 | 30.8245 | 68.5509 | 59.7593 |
| f/R13 | 1.3588 | 1.3346 | 1.3008 | 1.3375 | 1.2767 | 1.3794 |
| f/R14 | 3.7892 | 3.7664 | 3.6929 | 3.7366 | 3.5812 | 3.9205 |
| (R11+R12)/(R11-R12) | -0.978 | -1.036 | -0.988 | -1.026 | -0.989 | -1.013 |
| f12/f | 1.48359 | 1.32539 | 1.47219 | 1.42909 | 1.4957 | 1.37813 |
| |f34|/f | 8.24588 | 175.21 | 13.8555 | 12.836 | 14.5533 | 24.7104 |
| |f567|/f | 30.8453 | 1450.34 | 45.0157 | 33.7463 | 17.1963 | 24.0002 |
| TTL/f | 1.1947 | 1.2011 | 1.1928 | 1.2095 | 1.2282 | 1.1666 |
| ImgH/f | 0.960 | 0.938 | 0.983 | 0.955 | 1.008 | 0.911 |
| DL/TTL | 0.792 | 0.806 | 0.797 | 0.802 | 0.790 | 0.807 |
| f7/SAG71 | 5.548 | 4.713 | 4.397 | 5.196 | 4.372 | 4.620 |
| f7/SAG72 | -22.193 | -20.087 | -21.622 | -20.177 | -21.407 | -23.066 |
| (SAG71+SAG72)/CT7 | -1.523 | -1.781 | -1.996 | -1.553 | -2.015 | -2.083 |
| Yc62/SD62 | 0.554 | 0.611 | 0.605 | 0.595 | 0.620 | 0.558 |
| Yc72/SD72 | 0.382 | 0.376 | 0.378 | 0.404 | 0.398 | 0.362 |
| CT1/CT2 | 3.869 | 4.185 | 3.764 | 4.431 | 3.532 | 4.516 |
| CT3/CT2 | 1.80085 | 1.52183 | 1.55207 | 1.87091 | 1.55025 | 1.32589 |
| CT4/CT3 | 0.793 | 1.057 | 0.940 | 0.944 | 0.930 | 1.275 |
| CT6/CT5 | 1.149 | 2.023 | 1.963 | 1.644 | 2.311 | 1.144 |
| CT6/CT7 | 1.21054 | 1.25339 | 1.2697 | 1.21197 | 1.32332 | 1.28616 |

(continued)

| Conditional expression | Embodime nt 1 | Embodime nt 2 | Embodime nt 3 | Embodime nt 4 | Embodime nt 5 | Embodime nt 6 |
|---|---|---|---|---|---|---|
| (CT1+CT2)/(CT3+CT4+CT 5) | 0.96686 | 1.21957 | 1.14717 | 1.08007 | 1.13273 | 1.1417 |
| AT23/(AT12+AT34) | 0.486 | 1.086 | 0.520 | 0.309 | 0.600 | 0.539 |
| T61/CT6 | 2.124 | 1.879 | 2.044 | 1.992 | 1.936 | 2.132 |
| AT67max/AT67min | 21.461 | 24.527 | 37.414 | 36.210 | 40.302 | 24.786 |
| ET7/ET6 | 1.022 | 1.109 | 0.921 | 0.998 | 0.927 | 0.816 |
| ET7/CT7 | 0.857 | 0.986 | 0.783 | 1.018 | 0.866 | 0.846 |

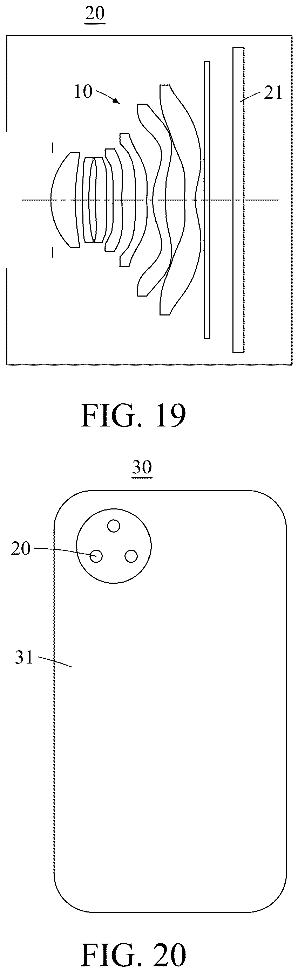

Referring to FIG. 19, the present application also provides an image module 20, which includes a photosensitive chip 21 and the optical system 10 of any of the embodiments described in the first aspect. The photosensitive chip 21 is arranged on the image side of the optical system 10. A photosensitive surface of the photosensitive chip 21 is located on the image plane of the optical system 10, and the light of the object passing through the lenses and incident on the photosensitive surface can be converted into an electrical signal of the image. The photosensitive chip 21 may be a complementary metal oxide semiconductor or a charge-coupled device. The image module 20 may be an image module integrated in an electronic device or an independent lens. By incorporating the optical system 10 provided in the embodiments of the present application into the image module 20, the image module 20 can be made smaller, have good imaging performance, and have an adjustable aperture.

Referring to FIG. 20, the present application also provides an electronic device 30, which includes a housing 31 and the above-mentioned image module 20. The image module 20 is arranged in the housing 31. The electronic device 30 may be, but is not limited to, a smart phone, a computer, and a smart watch. By incorporating the image module 20 provided in the present application into the electronic device 30, the electronic device 30 can be made smaller, have good imaging performance, and have an adjustable aperture.

It should be noted that the above examples are only used to illustrate the technical solutions of the present application rather than to limit them. Although the present application has been described in detail with reference to the preferred embodiments, it should be understood by those skilled in the art that the technical solutions of the present application can be modified or equivalently substituted without departing from the spirit and scope of the present application.

**Claims**

1. An optical system (10) with a total of seven lenses having refractive power, from an object side to an imaging side along an optical axis (101), sequentially comprising:

an adjustable aperture (STO) for adjusting an aperture size;
a first lens (L1) having positive refractive power, an object side surface (S1) of the first lens (L1) being convex near the optical axis (101), and an imaging side surface (S2) of the first lens (L1) being concave near the optical axis (101);
a second lens (L2) having negative refractive power;
a third lens (L3) having refractive power;
a fourth lens (L4) having refractive power, an object side surface (S7) of the fourth lens (L4) being convex near the optical axis (101), and an imaging side surface (S8) of the fourth lens (L4) being concave near the optical axis (101);
a fifth lens (L5) having negative refractive power, an imaging side surface (S10) of the fifth lens (L5) being concave near the optical axis (101);
a sixth lens (L6) having positive refractive power, and an object side surface (S11) of the sixth lens (L6) being convex near the optical axis (101); and
a seventh lens (L7) having negative refractive power, an object side surface (S13) of the seventh lens (L7) being convex near the optical axis (101), and an imaging side surface (S14) of the seventh lens (L7) being concave near the optical axis (101);
wherein the optical system (10) satisfies following conditional expressions:

$$80°<FOV<90°,$$

$$33<FOV/(FNOmax-FNOmin)<38,$$

and

$$1.2<TTL/ImgH<1.3;$$

wherein, FOV is the maximum field of view angle of the optical system (10), FNOmax is the maximum aperture number of the optical system (10), FNOmin is the minimum aperture number of the optical system (10), TTL is a distance from the object side surface (S1) of the first lens (L1) to an image plane (IMG) of optical system (10) along the optical axis (101), and ImgH is half of an image height corresponding to the maximum field of view angle of optical system (10).

2. The optical system (10) of claim 1, wherein the optical system (10) further satisfies at least one of following conditional expressions:

$$1.1<f1/f<1.4,$$

$$-9<f2/f<-4,$$

$$3<|f3|/f,$$

$$4<|f4|/f,$$

$$-2.3<f5/f<-1.8,$$

$$1.3<f/f6<1.5,$$

and

$$-1.4<f/f7<-1.1;$$

wherein, f1 is an effective focal length of the first lens (L1), f2 is an effective focal length of the second lens (L2), f3 is an effective focal length of the third lens (L3), f4 is an effective focal length of the fourth lens (L4), f5 is an effective focal length of the fifth lens (L5), f6 is an effective focal length of the sixth lens (L6), f7 is an effective focal length of the seventh lens (L7), and f is an effective focal length of optical system (10).

3. The optical system (10) of claim 1, wherein the optical system (10) further satisfies at least one of following conditional expressions:

$$2.3<f/R1<2.6,$$

and

$$0.9<R2/f<1.5,$$

wherein, R1 is a radius of curvature of the object side surface (S1) of the first lens (L1) at the optical axis (101), R2 is a radius of curvature of the imaging side surface (S2) of the first lens (L1) at the optical axis (101), and f is an effective focal length of optical system (10).

4. The optical system (10) of claim 1, wherein the optical system (10) further satisfies at least one of following conditional expressions:

$$1.1<|R3|/f<3.8,$$

and

$$0.8<|R4|/f;$$

wherein, R3 is a radius of curvature of an object side surface (S3) of the second lens (L2) at the optical axis (101), R4 is a radius of curvature of an imaging side surface (S4) of the second lens (L2) at the optical axis (101), and f is an effective focal length of optical system (10).

5. The optical system (10) of claim 1, wherein the optical system (10) further satisfies at least one of following conditional expressions:

$$1.5<|R5|/f<13,$$

and

$$5<|R6|/f;$$

wherein, R5 is a radius of curvature of an object side surface (S5) of the third lens (L3) at the optical axis (101), R6 is a radius of curvature of an imaging side surface (S6) of the third lens (L3) at the optical axis (101), and f is an effective focal length of optical system (10).

6. The optical system (10) of claim 1, wherein the optical system (10) further satisfies at least one of following conditional expressions:

$$1.5<R7/f<3.9,$$

and

$$1.45<R8/f<1.95,$$

wherein, R7 is a radius of curvature of the object side surface (S7) of the fourth lens (L4) at the optical axis (101), R8 is a radius of curvature of the imaging side surface (S8) of the fourth lens (L4) at the optical axis (101), and f is an effective focal length of optical system (10).

7. The optical system (10) of claim 1, wherein the optical system (10) further satisfies at least one of following conditional expressions:

$$11<|R9|/f,$$

$$1<R10/f<1.3;$$

and

$$-1.1<(R11+R12)/(R11-R12)<-0.9,$$

wherein, R9 is a radius of curvature of an object side surface (S9) of the fifth lens (L5) at the optical axis (101), R10 is a radius of curvature of the imaging side surface (S10) of the fifth lens (L5) at the optical axis (101), and f is an effective focal length of optical system (10).

8. The optical system (10) of claim 1, wherein the optical system (10) further satisfies at least one of following conditional expressions:

$$2.5 < R11/f < 2.7,$$

$$20 < |R12|/f,$$

$$1.2 < f/R13 < 1.4,$$

and

$$3.5 < f/R14 < 4,$$

wherein, R11 is a radius of curvature of the object side surface (S11) of the sixth lens (L6) at the optical axis (101), R12 is a radius of curvature of an imaging side surface (S12) of the sixth lens (L6) at the optical axis (101), R13 is a radius of curvature of the object side surface (S13) of the seventh lens (L7) at the optical axis (101), R14 is a radius of curvature of the imaging side surface (S14) of the seventh lens (L7) at the optical axis (101), and f is an effective focal length of optical system (10).

9. The optical system (10) of claim 1, wherein the optical system (10) further satisfies at least one of following conditional expressions:

$$1.3 < f12/f < 1.5,$$

$$8 < |f34|/f,$$

and

$$16 < |f567|/f;$$

wherein, f12 is a combined effective focal length of the first lens (L1) and the second lens (L2), f is an effective focal length of the optical system (10), f34 is a combined effective focal length of the third lens (L3) and the fourth lens (L4), and f567 is a combined effective focal length of the fifth lens (L5), the sixth lens (L6), and the seventh lens (L7).

10. The optical system (10) of claim 1, wherein the optical system (10) further satisfies at least one of following conditional expressions:

$$1.1 < TTL/f < 1.3,$$

$$0.9 < ImgH/f < 1.1,$$

and

$$0.77 < DL/TTL < 0.81;$$

wherein, f is an effective focal length of the optical system (10), and DL is a distance from the object side surface (S1) of the first lens (L1) to the imaging side surface (S14) of the seventh lens (L7) along the optical axis (101).

11. The optical system (10) of claim 1, wherein the optical system (10) further satisfies at least one of following conditional expressions:

$$4.3 < f7/SAG71 < 5.6,$$

$$-24 < f7/SAG72 < -19,$$

and

$$-2.1<(SAG71+SAG72)/CT7<-1.4;$$

wherein, f7 is an effective focal length of the seventh lens (L7), SAG71 is a sagitta of the maximum effective aperture of the object side surface (S13) of the seventh lens (L7), SAG72 is a sagitta of the maximum effective aperture of the imaging side surface (S14) of the seventh lens (L7), and CT7 is a thickness of the seventh lens (L7) at the optical axis (101).

12. The optical system (10) of claim 1, wherein the optical system (10) further satisfies at least one of following conditional expressions:

$$0.5<Yc62/SD62<0.65,$$

and

$$0.34<Yc72/SD72<0.42;$$

wherein, Yc62 is a vertical height from an off-axis vertex on an imaging side surface (S12) of the sixth lens (L6) to the optical axis (101), SD62 is the maximum effective aperture of the imaging side surface (S12) of the sixth lens (L6), Yc72 is a vertical height from an off-axis vertex of the imaging side surface (S14) of the seventh lens (L7) to the optical axis (101), and SD72 is the maximum effective aperture of the imaging side surface (S14) of the seventh lens (L7).

13. The optical system (10) of claim 1, wherein the optical system (10) further satisfies at least one of following conditional expressions:

$$3.5<CT1/CT2<4.6,$$

$$1.3<CT3/CT2<1.9,$$

$$0.7<CT4/CT3<1.3,$$

$$1.1<CT6/CT5<2.4,$$

$$1.2<CT6/CT7<1.4,$$

$$0.9<(CT1+CT2)/(CT3+CT4+CT5)<1.3,$$

$$0.3<AT23/(AT12+AT34)<1.1,$$

$$1.8<T61/CT6<2.2,$$

$$20<AT67max/AT67min<41,$$

$$0.8<ET7/ET6<1.2,$$

and

$$0.7<ET7/CT7<1.1,$$

wherein, CT1 is a thickness of the first lens (L1) at the optical axis (101), CT2 is a thickness of the second lens (L2) at the optical axis (101), CT3 is a thickness of the third lens (L3) at the optical axis (101), CT4 is a thickness of the fourth lens (L4) at the optical axis (101), CT5 is a thickness of the fifth lens (L5) at the optical axis (101), CT6 is a thickness of the sixth lens (L6) at the optical axis (101), CT7 is a thickness of the seventh lens (L7) at the optical axis (101), AT23 is a distance between the second lens (L2) and the third lens (L3) at the optical axis (101), AT23 is a distance between the first lens (L1) and the second lens (L2) at the optical axis (101), AT34 is a distance between the second lens (L2) and the third lens (L3) at the optical axis (101), T61 is a distance from the maximum effective aperture of the object side surface (S11) of the sixth lens (L6) to an imaging side surface (S12) of the sixth lens (L6) along the optical axis (101), AT67max is the maximum distance between the sixth lens (L6) and the seventh lens (L7) along the optical axis (101), and AT67min is the minimum distance between the sixth lens (L6) and the seventh lens (L7), ET6 a distance in a direction along the optical axis (101) from the maximum effective aperture of the object side surface (S11) of the sixth lens (L6) to the maximum effective aperture of the imaging side surface (S12) of the sixth lens (L6), and ET7 a distance in a direction along the optical axis (101) from the maximum effective aperture of the object side surface (S13) of the seventh lens (L7) to the maximum effective aperture of the imaging side surface (S14) of the seventh lens (L7).

14. An image module (20) comprising a photosensitive chip (21) and the an optical system (10) of any one of claims 1 to 13, wherein, the photosensitive chip (21) is arranged on the imaging side of the optical system (10).

15. An electronic device (30) comprising a housing (31) and the image module (20) of claim 14, wherein the image module (20) is arranged in the housing (31).

FIG. 1

FIG. 2

10    IR

L7    IMG

L6

L5    S9

L1 L3    S10

STO    L2    L4    S11

S1    S12

101

S2

S3    S13

S4    S14

S5 S6 S7

S8    S16

S15

## FIG. 3

——— - ——— 650.0000 NM
·-----------· 610.0000 NM
——————— 555.0000 NM
——·——·— 510.0000 NM
——— · · ——— 470.0000 NM
——— ·· —·· — 435.0000 NM

——————— 555.0000 NM T
·------------· 555.0000 NM S

Astigmatism field curvature          Distortion

Longitudinal spherical aberration          Image height          Image height

T  S  8.16          8.16
1.00

0.75          6.12          6.12

0.50          4.08          4.08

0.25          2.04          2.04

-0.500 -0.250  0.0  0.250 0.500     -0.500 -0.250  0.0  0.250 0.500     -5.0  -2.5  0.0  2.5  5.0

Focus point (mm)          Focus point (mm)          Distortion (%)

## FIG. 4

FIG. 5

FIG. 6

**FIG. 7**

**FIG. 8**

FIG. 9

FIG. 10

FIG. 11

---- - ---- 650.0000 NM
------------ 610.0000 NM
———————— 555.0000 NM
—·——·—— 510.0000 NM
—— · · —— 470.0000 NM
—— · · —— · · —— 435.0000 NM

———————— 555.0000 NM T
------------ 555.0000 NM S

Longitudinal spherical aberration

Astigmatism field curvature
Image height

Distortion
Image height

Focus point (mm)

Focus point (mm)

Distortion (%)

FIG. 12

## FIG. 13

| | |
|---|---|
| ———‧——— 650.0000 NM | |
| ‧‧‧‧‧‧‧‧‧‧‧ 610.0000 NM | |
| ————— 555.0000 NM | ————— 555.0000 NM T |
| ——‧‧——‧‧—— 510.0000 NM | ‧‧‧‧‧‧‧‧‧‧‧‧ 555.0000 NM S |
| ——‧‧—— 470.0000 NM | |
| ——‧‧—‧‧—— 435.0000 NM | |

Longitudinal spherical aberration

Astigmatism field curvature
Image height

Distortion
Image height

Focus point (mm)

Focus point (mm)

Distortion (%)

## FIG. 14

FIG. 15

Longitudinal spherical aberration

Astigmatism field curvature

Distortion

FIG. 16

FIG. 17

650.0000 NM
610.0000 NM
555.0000 NM
510.0000 NM
470.0000 NM
435.0000 NM

555.0000 NM T
555.0000 NM S

Longitudinal spherical aberration

Astigmatism field curvature
Image height

Distortion
Image height

Focus point (mm)

Focus point (mm)

Distortion (%)

FIG. 18

20

FIG. 19

30

FIG. 20